# EUROPÄISCHE PATENTSCHRIFT

(11) **EP 4 431 661 B1**
(45) Veröffentlichungstag und Bekanntmachung des Hinweises auf die Patenterteilung: **31.12.2025**
(21) Anmeldenummer: 24162648.0
(22) Anmeldetag: 11.03.2024
(51) Int. Cl.: E01C 19/00, B60K 26/02, E01C 21/00, E01C 23/00, E01C 23/088

(54) **SELBSTFAHRENDE BODENBEARBEITUNGSMASCHINE MIT FAHRSCHALTER MIT MEHR ALS EINEM BETRIEBSMODUS ZUR STEUERUNG DER FAHRBEWEGUNG**
SELF-PROPELLED SOIL WORKING MACHINE WITH A CIRCUIT BREAKER WITH MORE THAN ONE OPERATING MODE FOR CONTROLLING THE MOVEMENT
MACHINE AUTOMOTRICE DE TRAVAIL DU SOL AVEC UN CONTACTEUR AVEC PLUS D'UN MODE DE FONCTIONNEMENT POUR COMMANDER LE DÉPLACEMENT

(30) Priorität: 14.03.2023 DE 102023106316
(43) Veröffentlichungstag der Anmeldung: 18.09.2024
(73) Patentinhaber: Wirtgen GmbH, 53578 Windhagen (DE)
(72) Erfinder: Ridder, Marc, 53560 Vettelschoß (DE)
(74) Vertreter: Ruttensperger Lachnit Trossin Gomoll

(56) Entgegenhaltungen:
- JP-A- 2019 049 115
- US-A1- 2014 100 743
- US-B2- 7 942 604

## Beschreibung

Die vorliegende Anmeldung betrifft eine zur abtragenden Bodenbearbeitung ausgebildete selbstfahrende Bodenbearbeitungsmaschine gemäß dem Oberbegriff von Anspruch 1.

Eine solche Bodenbearbeitungsmaschine ist aus der US 7942604 B2 bekannt.

An selbstfahrenden Bodenbearbeitungsmaschinen zur abtragenden Bodenbearbeitung sind Fahrhebel als Fahrschalter bekannt, welche aus einer Neutralstellung neigend ausgelenkt werden können, wobei die Steuervorrichtung die Richtung der Auslenkung als die vom Maschinenführer gewünschte Fahrtrichtung indizierend interpretiert und den Betrag der Auslenkung als einer gewünschten Soll-Fahrgeschwindigkeit in dem Sinne entsprechend interpretiert, dass eine größere Auslenkung einer höheren gewünschten Soll-Fahrgeschwindigkeit entspricht als eine kleinere Auslenkung.

Nachteilig an diesem Betriebsmodus, gemäß welchem die Steuervorrichtung die Bodenbearbeitungsmaschine nach Maßgabe der Auslenkung des Fahrschalters zum Erreichen der Soll-Fahrgeschwindigkeit antreibt, ist, dass der Fahrschalter während des gesamten Fahrbetriebs in der gewünschten ausgelenkten Stellung gehalten werden muss, da eine Verringerung oder Erhöhung des Auslenkungsbetrags eine Änderung der gewünschten Soll-Fahrgeschwindigkeit bedeutet, was in der Regel eine Änderung der Ist-Fahrgeschwindigkeit bedeutet.

Dies ist insbesondere für Bodenbearbeitungsmaschinen mit mehr als einem vollwertigen Bedienplatz zur Fahrsteuerung der Bodenbearbeitungsmaschine und damit mit mehr als einem Fahrschalter dann problematisch, wenn der Maschinenführer an der bereits fahrenden Bodenbearbeitungsmaschine den Bedienplatz wechseln will.

Weiter sind selbstfahrende Bodenbearbeitungsmaschinen mit einem Fahrhebel als Fahrschalter bekannt, welcher aus einer Neutralstellung ausgelenkt werden kann, wobei die Steuervorrichtung die Richtung der Auslenkung als die vom Maschinenführer gewünschte Fahrtrichtung indizierend interpretiert und den Betrag der Auslenkung als einer gewünschten Soll-Fahrbeschleunigung in dem Sinne entsprechend interpretiert, dass eine größere Auslenkung einer höheren gewünschten Soll-Fahrbeschleunigung entspricht als eine kleinere Auslenkung.

Bei der letztgenannten Funktionsweise des Fahrschalters wird die Fahrgeschwindigkeit der Bodenbearbeitungsmaschine so lange geändert, wie der Fahrschalter aus der Neutralstellung heraus ausgelenkt ist, und zwar mit der dem Betrag der Auslenkung entsprechenden Fahrbeschleunigung. Eine der aktuellen Bewegungsrichtung entgegengesetzte Auslenkungsrichtung des Fahrschalters bewirkt dementsprechend als negative Fahrbeschleunigung eine Verzögerung.

Dies hat den Vorteil, dass der Fahrschalter nur für eine Änderung eines einmal erreichten Fahrzustands betätigt werden muss, sodass dann, wenn die Bodenbearbeitungsmaschine eine längere Strecke mit einer gleichförmigen Bewegung zurücklegen soll, der Fahrschalter nach Erreichen der gewünschten gleichförmigen Bewegung nicht mehr betätigt werden muss.

Darüber hinaus kann mit einer Fahrsteuerung, bei welcher das Ausmaß einer Auslenkung des Fahrschalters dem Betrag der Fahrbeschleunigung durch den Fahrantrieb entspricht, auch der Fahrbetrieb von Maschinen mit mehreren Bedienplätzen von jedem Bedienplatz aus gesteuert werden, wobei eine bereits fahrende Bodenbearbeitungsmaschine den Wechsel des Maschinenführers von einem Bedienplatz zu einem anderen Bedienplatz ohne Änderung des Fahrzustands, insbesondere der Fahrgeschwindigkeit erlaubt. Derartige Fahrsteuerungen sind beispielsweise an Straßengroßfräsen realisiert, welche einen Fahrstand mit mehr als einem Bedienplatz aufweisen. Die Bedienplätze sind in Maschinenquerrichtung mit Abstand voneinander angeordnet, sodass der Maschinenführer von seinem gewählten Bedienplatz entweder nahe des in Fahrtrichtung rechten oder nahe des in Fahrtrichtung linken Maschinenrandes den Bodenbearbeitungsbetrieb der Maschine beobachten kann.

Nachteilig an dieser zweiten Fahrsteuerung ist das Anfahren der Bodenbearbeitungsmaschine, da Menschen grundsätzlich, und damit auch Maschinenführer, keinen natürlichen Sinn für Fahrbeschleunigung haben und so ein dosiertes Anfahren, gerade bei gleichzeitig in Arbeitseingriff stehender Bodenbearbeitungsvorrichtung mit abhängig von der durch den Fahrantrieb bereitgestellten Vorschubgeschwindigkeit stark schwankender Kraftrückwirkung, nur schwierig möglich ist. Die erreichte Fahrgeschwindigkeit ist wenig intuitiv von der Dauer der Betätigung des Fahrschalters abhängig.

Aus der US 2014/100743 A1 ist eine landwirtschaftliche Erntemaschine bekannt, die durch Auslenkung desselben Fahrschalters wahlweise nach Maßgabe der Fahrbeschleunigung oder nach Maßgabe der Fahrgeschwindigkeit bewegt werden kann, je nachdem, ob die Maschine Ernteaufgaben ausführt oder zur Ankopplung eines Arbeitsaggregats manövriert wird.

Der in der vorliegenden Anmeldung beschriebenen Erfindung liegt daher die objektive technische Aufgabe zugrunde, eine Steuerung eines Fahrbetriebs einer gattungsgemäßen Bodenbearbeitungsmaschine zu erleichtern, ohne hierfür die Bedieneinrichtungen zu verkomplizieren.

Diese Aufgabe löst die vorliegende Erfindung an einer bodenabtragenden selbstfahrenden Bodenbearbeitungsmaschine mit den Merkmalen des Anspruchs 1. Die Steuervorrichtung der erfindungsgemäßen Bodenbearbeitungsmaschine ist umschaltbar zwischen dem ersten Betriebsmodus, in welchem die Steuervorrichtung der Auslenkung des Fahrschalters gemäß dem ersten Zuordnungszusammenhang einen Wert einer ersten Bewegungsgröße zuordnet und den Fahrantrieb nach Maßgabe der ersten Bewegungsgröße steuert, und dem zweiten Betriebsmodus, in welchem die Steuervorrichtung der Auslenkung des Fahrschalters gemäß dem zweiten Zuordnungszusammenhang einen Wert einer von der ersten Bewegungsgröße verschiedenen zweiten Bewegungsgröße zuordnet und den Fahrantrieb nach Maßgabe der zweiten

Bewegungsgröße steuert, wobei die Steuervorrichtung im zweiten Betriebsmodus den Fahrantrieb nicht gemäß dem ersten Zuordnungszusammenhang nach Maßgabe der ersten Bewegungsgröße steuert.

Durch die Umschaltbarkeit der Steuervorrichtung zwischen dem ersten und dem zweiten Betriebsmodus genügt nach wie vor ein einziger Fahrschalter an einem Bedienplatz, um einen Fahrbetrieb der Bodenbearbeitungsmaschine zu steuern. Je nachdem, ob der Maschinenführer eine Steuerung des Fahrantriebs durch die Steuervorrichtung nach Maßgabe der ersten Bewegungsgröße oder nach Maßgabe der zweiten Bewegungsgröße bevorzugt, kann eine Umschaltung der Steuervorrichtung zwischen den genannten Betriebsmodi den als geeigneter erachteten Betriebsmodus aktivieren. Wie weiter unten ausführlich beschrieben werden wird, kann die Wahl bzw. Aktivierung des geeignetsten Betriebsmodus auch ohne Beitrag durch den Maschinenführer nach objektiven Kriterien der jeweiligen Betriebssituation des Fahrantriebs oder/und der Betätigungssituation des Fahrschalters erfolgen.

Die Bodenbearbeitungsmaschine ist eine abtragende Bodenbearbeitungsmaschine, wie eine Straßenfräse, ein Recycler oder ein Surface-Miner. Erfindungsgemäß ist die Bodenbearbeitungsvorrichtung der Bodenbearbeitungsmaschine zur abtragenden Bodenbearbeitung ausgebildet. Die Bodenbearbeitungsvorrichtung umfasst eine mit Abtragswerkzeugen ausgerüstete Abtragswalze, wie beispielsweise Fräswalze oder Schneidwalze. Als Fräswalze trägt die Abtragswalze Fräsmeißel als Abtragswerkzeuge, als Schneidwalze trägt die Abtragswalze beispielsweise Schneidscheiben als Abtragswerkzeuge. Die Abtragswalze ist in der Bodenbearbeitungsvorrichtung bevorzugt um eine in Maschinenquerrichtung verlaufende Walzenachse rotierbar. Aus Gründen der Arbeitssicherheit ist die Abtragswalze bevorzugt in einem zum bearbeitenden Boden hin offenen, an sich bekannten Walzenkasten aufgenommen und durch diesen eingehaust.

Das Fahrwerk umfasst eine Mehrzahl von abrollbaren Laufwerken. Einzelne oder alle Laufwerke können Räderlaufwerke oder Raupenlaufwerke sein. Bevorzugt sind zwei Laufwerke, welche aufgrund ihrer Anordnung in einem gemeinsamen Längsbereich der Bodenbearbeitungsmaschine eine gemeinsame Fahrwerksachse bilden, gleichartige Laufwerke, also entweder beide Räderlaufwerke oder beide Raupenlaufwerke. Bevorzugt sind alle Laufwerke des Fahrwerks gleichartige Laufwerke.

Der Fahrantrieb kann ein an Bodenbearbeitungsmaschinen bewährter hydraulischer Antrieb sein, wobei bevorzugt jedes Laufwerk des Fahrwerks einen eigenen Antriebsmotor aufweist. Der Fahrantrieb kann jedoch auch ein elektrischer Antrieb sein, wobei wiederum bevorzugt jedes Laufwerk des Fahrwerks einen eigenen Antriebsmotor aufweist. Ebenso möglich ist, dass nur eine Teilmenge der im Fahrwerk vorhandenen Laufwerke angetrieben ist, wobei jedes Laufwerk der Teilmenge einen eigenen Antriebsmotor aufweist, und dass die übrigen Laufwerke als Folgelaufwerke lediglich passiv, angetrieben durch die angetriebenen Laufwerke, auf ihrem Aufstandsuntergrund abrollen.

Bevorzugt ist der Maschinenrahmen relativ zu den Laufwerken höhenverstellbar angeordnet, etwa durch Hubsäulen, welche den Maschinenrahmen mit den Laufwerken verbinden. Dabei können nur die Laufwerke einer Fahrwerksachse durch Hubsäulen mit dem Maschinenrahmen verbunden sein, während Laufwerke einer anderen Fahrwerksachse ohne eine Möglichkeit zur Höhenverstellung des Maschinenrahmens mit diesem verbunden sind. Ebenso können alle Laufwerke des Fahrwerks durch Hubsäulen mit dem Maschinenrahmen verbunden sein. Die Hubsäulen können hydraulisch oder/und elektromechanisch oder/und pneumatisch in ihrer sich längs der Maschinenhöhenrichtung erstreckenden Längenabmessung veränderlich sein und dadurch eine Höhenverlagerung des Maschinenrahmens relativ zu den Laufwerken ermöglichen.

Am Maschinenrahmen ist bevorzugt ein Fahrstand mit wenigstens einem Bedienplatz angeordnet, von welchem aus ein Maschinenführer den Betrieb, insbesondere auch den Fahrbetrieb, der Bodenbearbeitungsmaschine steuern kann.

Grundsätzlich ist die Möglichkeit der Umschaltung der Steuervorrichtung zwischen zwei, insbesondere wenigstens zwei, Betriebsmodi vorteilhaft, unabhängig davon, welche unterschiedlichen Bewegungsgrößen als erste und zweite Bewegungsgröße herangezogen werden. Dies eröffnet die Möglichkeit, die Bodenbearbeitungsmaschine mit ein und demselben Fahrschalter gemäß zwei unterschiedlichen Steuercharakteristika zur Bewegung anzutreiben.

Gemäß den einleitenden Ausführungen umfasst oder ist bevorzugt die erste Bewegungsgröße eine Soll-Fahrgeschwindigkeit der Bodenbearbeitungsmaschine. Das Ausmaß der Auslenkung gibt somit eine vom Maschinenführer gewünschte und folglich zu erreichende Soll-Fahrgeschwindigkeit der Bodenbearbeitungsmaschine vor. Bevorzugt ist die gewünschte Fahrtrichtung durch die Richtung der Auslenkung einstellbar. Eine Auslenkung des Fahrschalters in Vorwärtsfahrtrichtung setzt die Bodenbearbeitungsmaschine in Vorwärtsfahrtrichtung in Bewegung. Gleiches gilt mutatis mutandis für die Auslenkung des Fahrschalters in Rückwärtsfahrtrichtung.

Dabei gilt, dass eine größere betragsmäßige Auslenkung des Fahrschalters eine größere durch die Bodenbearbeitungsmaschine zu erreichende Soll-Fahrgeschwindigkeit anzeigt und dass eine kleinere betragsmäßige Auslenkung des Fahrschalters eine kleinere durch die Bodenbearbeitungsmaschine zu erreichende Soll-Fahrgeschwindigkeit anzeigt.

Der Zusammenhang zwischen betragsmäßiger Auslenkung des Fahrschalters und Betrag der jeweils zugeordneten Soll-Fahrgeschwindigkeit ist durch den ersten Zuordnungszusammenhang definiert. Der erste Zuordnungszusammenhang kann in einem Datenspeicher der Steuervorrichtung hinterlegt sein, etwa als Kennfeld, Kennlinie, formelmäßiger Zusammenhang, Zuordnungstabelle und dergleichen. Der erste Zuordnungszusammenhang kann jedoch zusätzlich oder alternativ durch die jeweilige konstruktive bzw. installatorische Ausgestaltung des Fahrschalters definiert sein, etwa indem der Fahrschalter durch seine Auslenkung ein elektrisches Stellglied, wie beispielsweise ein Potentiometer, betätigt, welches eine elektrische Größe ausgibt, deren Betrag abhängig von der jeweiligen Betätigungsstellung bzw. Auslenkung des elektrischen Stellglieds ist.

Der Zusammenhang zwischen betragsmäßiger Auslenkung des Fahrschalters und dem Betrag der jeweils zugeordneten Soll-Fahrgeschwindigkeit kann ein linearer Zusammenhang sein, welcher für Maschinenführer besonders einfach intuitiv erfassbar ist. Der Zusammenhang kann jedoch auch ein progressiver oder degressiver Zusammenhang sein, gemäß welchem ausgehend von einem erreichten Auslenkungsbetrag eine Erhöhung oder Verringerung um eine bestimmte Anzahl an Prozentpunkten bezogen auf 100 % maximale Auslenkung zu einer Erhöhung oder Verringerung um eine größere Anzahl an Prozentpunkten (progressiv) oder zu einer Erhöhung oder Verringerung um eine geringere Anzahl an Prozentpunkten (degressiv) der Soll-Fahrgeschwindigkeit führt.

Die Bodenbearbeitungsmaschine weist bevorzugt wenigstens einen Geschwindigkeitssensor auf, welcher die aktuelle Ist-Fahrgeschwindigkeit der Bodenbearbeitungsmaschine erfasst und an die Steuervorrichtung ausgibt, sodass die Steuervorrichtung durch einen Vergleich der durch die Auslenkung des Fahrschalters angezeigten gewünschten Soll-Fahrgeschwindigkeit und der vom wenigstens einen Geschwindigkeitssensor erfassten Ist-Fahrgeschwindigkeit erkennen kann, wann keine weitere Fahrbeschleunigung bzw. Verzögerung der Bodenbearbeitungsmaschine mehr nötig ist, weil die Ist-Fahrgeschwindigkeit der Soll-Fahrgeschwindigkeit ausreichend genau entspricht.

Ebenso bevorzugt kann die zweite Bewegungsgröße gemäß der einleitenden Ausführungen eine Soll-Fahrbeschleunigung oder eine mit der Fahrbeschleunigung der Bodenbearbeitungsmaschine in Wirkzusammenhang stehende Betriebsgröße der Bodenbearbeitungsmaschine, insbesondere des Fahrantriebs, umfassen oder sein.

Üblicherweise weisen Bodenbearbeitungsmaschinen keinen Beschleunigungssensor auf, sodass die Steuervorrichtung den Fahrantrieb nicht unmittelbar durch einen Vergleich einer Ist-Fahrbeschleunigung mit einer Soll-Fahrbeschleunigung regelnd ansteuern kann. Vielmehr steuert die Steuervorrichtung unmittelbar Vorrichtungen, welche die vom Fahrantrieb bewirkte Fahrbeschleunigung beeinflussen. Beispielsweise kann die Steuervorrichtung im Falle eines elektrischen Fahrantriebs eine einem jeweiligen Elektromotor zugeführte elektrische Größe, wie beispielsweise einen Motorstrom, steuern. Dabei muss die Steuervorrichtung die dem Elektromotor zugeführte elektrische Größe nicht unmittelbar selbst ausgeben, sondern kann über ein geringeres an elektrische Schaltbauteile, wie etwa Thyristoren oder/und Dioden, ausgegebenes elektrisches Steuersignal, wie beispielsweise einen Steuerstrom oder/und eine Steuerspannung, betragsmäßig größere elektrische Größen, wie Spannungen oder/und Ströme, insbesondere wie den genannten Motorstrom, steuern. Im Ergebnis wird unter Berücksichtigung der jeweiligen Betriebscharakteristika der beteiligten elektrischen Komponenten einschließlich des elektrischen Fahrantriebs eine betragsmäßig größere Auslenkung des Fahrschalters zu einer betragsmäßig größeren Soll-Fahrbeschleunigung führen und umgekehrt. Entsprechendes gilt auch für andere Antriebsarten.

So kann es beispielsweise sein, dass die Steuervorrichtung zwar ein sich linear mit dem Auslenkungsbetrag des Fahrschalters veränderndes Steuersignal ausgibt, welches auch eine lineare Änderung einer vom Fahrantrieb ausgegebenen Antriebskraft oder eines Antriebsmoments bewirkt. Da jedoch die Verluste, wie Reibungs- und Strömungsverluste, im Antriebsstrang in ihrer Höhe abhängig von der aktuellen Fahrgeschwindigkeit sein können und von der ausgegebenen Antriebskraft bzw. Antriebsmoment ausgeglichen werden müssen, kann trotz eines linearen Verhaltens der Steuervorrichtung und sogar des Fahrantriebs in Bezug auf den Auslenkungsbetrag des Fahrschalters die effektiv bewirkte Fahrbeschleunigung der Bodenbearbeitungsmaschine keinen linearen Zusammenhang mit dem den Auslenkungsbetrag des Fahrschalters aufweisen.

Im Falle eines zum Zeitpunkt der vorliegenden Anmeldung für zahlreiche Bodenbearbeitungsmaschinen üblichen hydraulischen Antriebs kann die Steuervorrichtung ein, vorzugsweise elektrisches, Signal ausgeben, dessen Signalstärke, wie beispielsweise Spannung oder/und Stromstärke, abhängig von der Auslenkung des Fahrschalters ist. Das elektrische Signal bewirkt in an sich bekannter Weise eine Betätigung wenigstens einer hydraulischen Komponente zur Veränderung eines Mengenstroms eines hydraulischen Mediums im Hydraulikkreislauf des Fahrantriebs oder/und zur Veränderung eines Schluckvolumens eines hydraulischen Antriebsmotors bzw. einer hydraulischen Antriebspumpe. Im Ergebnis wird unter Berücksichtigung der Betriebscharakteristika der beteiligten Komponenten eine Veränderung der Fahrbeschleunigung der Bodenbearbeitungsmaschine in Abhängigkeit von der Auslenkung des Fahrschalters erreicht.

Beispielsweise kann die Steuervorrichtung abhängig von der Auslenkung des Fahrschalters einen Steuerstrom von 0 bis 1 A, vorzugsweise von 100 bis 900 mA, besonders bevorzugt von 200 bis 600 mA, ausgeben und damit eine weitere elektrische Komponente abhängig von der Stärke des ausgegebenen Signalstroms steuern.

Dabei ist klarstellend zu berücksichtigen, dass bei Verwendung einer Soll-Fahrgeschwindigkeit als der ersten Bewegungsgröße und bei gleichzeitig von der Soll-Fahrgeschwindigkeit abweichender Ist-Fahrgeschwindigkeit eine Fahrbeschleunigung der Bodenbearbeitungsmaschine unabdingbar ist, um ausgehend von der Ist-Fahrgeschwindigkeit die durch Auslenkung des Fahrschalters angezeigte Soll-Fahrgeschwindigkeit zu erreichen.

Hier ist es vorteilhaft, wenn betragsmäßig geringere Unterschiede zwischen Ist- und Soll-Fahrgeschwindigkeit durch betragsmäßig geringere Fahrbeschleunigungen überwunden werden als betragsmäßig größere. Gerade ausgehend von einer Ist-Fahrgeschwindigkeit von 0 m/min, also ausgehend vom Stillstand der Bodenbearbeitungsmaschine, wird in der bevorzugten Ausgestaltung die Bodenbearbeitungsmaschine mit geringeren Fahrbeschleunigungen auf geringere Soll-Fahrgeschwindigkeiten beschleunigt und wird mit größeren Fahrbeschleunigungen auf höhere Soll-Fahrgeschwindigkeiten beschleunigt. Im Ergebnis bedeutet dies, dass im ersten Betriebsmodus, in dem genannten Beispielfall, die Auslenkung des Fahrschalters nicht nur unmittelbar eine gewünschte Soll-Fahrgeschwindigkeit, sondern mittelbar auch eine zu deren Erreichen einzustellende Soll-Fahrbeschleunigung repräsentiert. Daher ist, wie oben bereits angedeutet, nicht auszuschließen, dass im ersten Betriebsmodus die Steuervorrichtung den Fahrantrieb nicht nur nach Maßgabe der ersten Bewegungsgröße, sondern auch nach Maßgabe der zweiten Bewegungsgröße ansteuert.

Ebenso wird im zweiten Betriebsmodus durch Beschleunigen der Bodenbearbeitungsmaschine nach Maßgabe der Auslenkung des Fahrschalters stets unvermeidlich eine Geschwindigkeit der Bodenbearbeitungsmaschine erreicht. Im Gegensatz zum ersten Betriebsmodus ist im zweiten Betriebsmodus die von der Bodenbearbeitungsmaschine erreichte Geschwindigkeit jedoch nicht nur von der Auslenkung des Fahrschalters abhängig, sondern auch von der Dauer der Auslenkung. Vielmehr steuert die Steuervorrichtung den Fahrantrieb zur Fahrbeschleunigung der Bodenbearbeitungsmaschine in die durch die Richtung der Auslenkung angezeigte Richtung entweder so lange, bis die Auslenkung des Fahrschalters beendet ist oder bis zum Erreichen einer Maximalgeschwindigkeit oder, im Falle einer entgegen die aktuelle Fahrtrichtung gerichteten Fahrbeschleunigung, bis zum Stillstand der Bodenbearbeitungsmaschine an. Grundsätzlich wäre es denkbar, dass auch bei einer zunächst negativen Fahrbeschleunigung die Bodenbearbeitungsmaschine zunächst verzögert und bei fortgesetzter Auslenkung dann in die entgegengesetzte Richtung bis zur Beendigung der Auslenkung oder bis zum Erreichen der betragsmäßigen Maximalgeschwindigkeit beschleunigt wird. Aus Gründen verbesserter Arbeitssicherheit ist jedoch eine Fahrbeschleunigung der Bodenbearbeitungsmaschine entgegen ihrer aktuellen Bewegungsrichtung (Verzögerung) selbst bei fortgesetzter Auslenkung des Fahrschalters nur bis zum Stillstand der Bodenbearbeitungsmaschine bevorzugt, jedoch nicht darüber hinaus.

Die im zweiten Betriebsmodus erreichbare Maximalgeschwindigkeit kann eine baulich durch die Konstruktion der Bodenbearbeitungsmaschine inhärent vorgegebene Maximalgeschwindigkeit sein. Dies ist dann jene Maximalgeschwindigkeit, bei welcher alle an der Bewegung der Bodenbearbeitungsmaschine beteiligten Komponenten durch Reibung und dergleichen insgesamt eine Verzögerung bewirken, welche der durch den Fahrantrieb bewirkten Fahrbeschleunigung betragsmäßig entspricht, sodass zwischen Fahrantrieb und Fahrwiderstand ein Gleichgewicht herrscht.

Aus Gründen der Betriebssicherheit ist es jedoch nicht bevorzugt, die Bodenbearbeitungsmaschine bis zu einer Geschwindigkeit zu beschleunigen, welche nur baulich durch die an der Bodenbearbeitungsmaschine verwendeten Komponenten bestimmt und somit aufgrund der sich unterschiedlich realisierenden Fertigungstoleranzen von Bodenbearbeitungsmaschine zu Bodenbearbeitungsmaschine unterschiedlich wäre.

Bevorzugt ist daher im zweiten Betriebsmodus eine Maximalgeschwindigkeit unterhalb der baulich bestimmten Maximalgeschwindigkeit definiert, ab welcher die Bodenbearbeitungsmaschine im zweiten Betriebsmodus nicht weiter beschleunigt wird. Auch zum Zweck des Überprüfens eines Erreichens der durch die Steuervorrichtung vorgegebenen Maximalgeschwindigkeit umfasst die Bodenbearbeitungsmaschine bevorzugt wenigstens einen Geschwindigkeitssensor, um die jeweilige Fahrgeschwindigkeit der Bodenbearbeitungsmaschine zu erfassen und an die Steuervorrichtung zu übertragen. Die durch die Steuervorrichtung vorgegebene Maximalgeschwindigkeit ist jedoch bevorzugt unabhängig von der Auslenkung des Fahrschalters, sodass die Steuervorrichtung im zweiten Betriebsmodus bevorzugt den Fahrantrieb nicht nach Maßgabe einer Kombination aus Auslenkung des Fahrschalters und erster Bewegungsgröße steuert.

In einer weniger bevorzugten, aber immer noch der vorliegenden Erfindung unterfallenden Ausführungsform kann die Steuervorrichtung im zweiten Betriebsmodus der erfassten Auslenkung des Fahrschalters gemäß einem weiteren Zuordnungszusammenhang einen Wert einer ersten Bewegungsgröße zuordnen und den Fahrantrieb auch nach Maßgabe der ersten Bewegungsgröße steuern. Der weitere Zuordnungszusammenhang ist dann vom ersten Zuordnungszusammenhang verschieden. Denkbar wäre es in diesem Zusammenhang beispielsweise, im zweiten Betriebsmodus die erzielbare Maximalgeschwindigkeit in gewissem Ausmaß, insbesondere geringfügig, etwa nicht mehr als ±10 % um eine voreingestellte Maximalgeschwindigkeit, in Abhängigkeit von der Auslenkung des Fahrschalters zu verändern.

Wenngleich die Bodenbearbeitungsmaschine bevorzugt lenkbar ist, sind die durch den Fahrschalter eingebbaren Bewegungs- bzw. Antriebsrichtungen, in welche die Steuervorrichtung den Fahrantrieb zur Bewegung der Bodenbearbeitungsmaschine ansteuern soll, bevorzugt auf die entgegengesetzten Richtungen "vorwärts" und "rückwärts" beschränkt. Grundsätzlich spielt ein Lenkeinschlag für den Fahrantrieb von Laufwerken des Fahrwerks als Steuerungseingabe keine Rolle. Aus Betriebssicherheitsgründen kann jedoch in Abhängigkeit vom Lenkeinschlag die Maximalgeschwindigkeit oder/und die maximal erreichbare Beschleunigung auf einen geringeren Wert reduziert sein als bei Geradeausfahrt ohne Lenkeinschlag. Die steuerungstechnisch im zweiten Betriebsmodus vorgegebene Maximalgeschwindigkeit kann für Vorwärtsfahrt eine andere, vorzugsweise höhere, sein als für Rückwärtsfahrt. Ebenso kann bzw. können der erste oder/und der zweite Zuordnungszusammenhang für Vorwärtsfahrt und Rückwärtsfahrt unterschiedlich sein.

Wie oben ausführlich am Beispiel der Soll-Fahrgeschwindigkeit als erste Bewegungsgröße und Soll-Fahrbeschleunigung als zweite Bewegungsgröße beschrieben wurde, kann folglich die Steuervorrichtung ganz allgemein im ersten Betriebsmodus der Auslenkung des Fahrschalters gemäß einem dritten Zuordnungszusammenhang einen Wert der zweiten Bewegungsgröße zuordnen und den Fahrantrieb auch nach Maßgabe der zweiten Bewegungsgröße steuern.

Grundsätzlich kann der dritte Zuordnungszusammenhang ein eigener, vom ersten oder/und zweiten Zuordnungszusammenhang verschiedener Zuordnungszusammenhang sein, welcher beispielsweise nur im ersten Betriebsmodus Anwendung findet. Für Maschinenführer, welche den Fahrbetrieb der Bodenbearbeitungsmaschine sowohl im ersten als auch im zweiten Betriebsmodus steuern, hat es sich jedoch für die intuitive Bedienbarkeit der Bedienvorrichtung als vorteilhaft erwiesen, wenn der dritte Zuordnungszusammenhang der zweite Zuordnungszusammenhang ist. Dies bedeutet im Falle der Soll-Fahrbeschleunigung oder einer mit der Fahrbeschleunigung der Bodenbearbeitungsmaschine, insbesondere des Fahrantriebs, in Wirkzusammenhang stehenden Betriebsgröße als zweiter Bewegungsgröße, dass eine betragsmäßig gleiche Auslenkung des Fahrschalters eine betragsmäßig gleiche Fahrbeschleunigung in beiden Betriebsmodi aus erstem und zweiten Betriebsmodus bewirkt.

Grundsätzlich ist denkbar, dass an einem Bedienplatz, gegebenenfalls sogar am Fahrschalter selbst, ein nachfolgend als "Umschalter" bezeichneter und unabhängig vom Fahrschalter betätigbarer Schalter angeordnet ist, durch dessen gezielte Betätigung ein Maschinenführer die Steuervorrichtung zwischen erstem und zweitem Betriebsmodus umschalten kann. Betrachtungen von Bodenbearbeitungsmaschinen im Betrieb haben jedoch gezeigt, dass eine Fahrsteuerung im ersten Betriebsmodus für ganz bestimmte Betriebssituationen vorteilhaft ist, und dass eine Fahrsteuerung im zweiten Betriebsmodus für ganz bestimmte andere Betriebssituationen vorteilhaft ist. Bei den Betriebssituationen handelt es sich insbesondere um Fahrbetriebssituationen, welche durch den Fahrschalter und seine Betätigung selbst herbeigeführt werden. Daher ist es zur Entlastung des Maschinenführers vorteilhaft, wenn die Steuervorrichtung dazu ausgebildet ist, abhängig vom Betätigungszustand des Fahrschalters durch eine Bewegung des Fahrschalters den ersten Betriebsmodus zu beenden und durch dieselbe oder eine andere Bewegung des Fahrschalters eine Steuerung des Fahrantriebs im zweiten Betriebsmodus zu beginnen.

Im bevorzugten Fall der Soll-Fahrgeschwindigkeit als erste Bewegungsgröße ist eine Fahrsteuerung im ersten Betriebsmodus vor allem beim Anfahren der Bodenbearbeitungsmaschine aus dem Stillstand vorteilhaft. Hat die Bodenbearbeitungsmaschine einmal eine vom Maschinenführer gewünschte Soll-Fahrgeschwindigkeit als Ist-Fahrgeschwindigkeit erreicht, ist eine Fahrsteuerung im beschleunigungsbezogenen zweiten Betriebsmodus bevorzugt. Dann nämlich sind häufig nur noch kleinere Korrekturen der Fahrgeschwindigkeit notwendig, die im beschleunigungsbezogenen zweiten Betriebsmodus durch gelegentliche kurzzeitige Betätigungen des Fahrschalters bewirkt werden können.

Es soll jedoch nicht ausgeschlossen sein, dass zusätzlich zu der zuvor beschriebenen automatischen Umschaltung vom ersten in den zweiten Betriebsmodus abhängig vom Betätigungszustand des Fahrschalters durch eine Bewegung des Fahrschalters der zuvor beschriebene Umschalter vorhanden ist, um beispielsweise die Bodenbearbeitungsmaschine unabhängig vom Betätigungszustand des Fahrschalters in einem der beiden genannten Betriebsmodi, etwa im ersten Betriebsmodus, rangieren zu können, etwa für eine Verladung auf ein Transportfahrzeug.

Es hat sich als intuitiv und ergonomisch besonders vorteilhaft erwiesen, als die oben genannte Bewegung, insbesondere Betätigung des Fahrschalters zur Beendigung des ersten Betriebsmodus, insbesondere zum Wechsel von dem ersten in den zweiten Betriebsmodus, eine die Auslenkung des Fahrschalters verändernde Bewegung des Fahrschalters zu verwenden. Bevorzugt ist die Veränderung der Auslenkung des Fahrschalters betragsmäßig größer als ein vordefinierter oder gleich einem vordefinierten Toleranzweg, um eine Beendigung des ersten Betriebsmodus, insbesondere einen Wechsel vom ersten in den zweiten Betriebsmodus, aufgrund von nicht gewillkürten Bewegungen, etwa ausgelöst durch Rütteln oder Stöße an der Maschine, zu vermeiden oder wenigstens die Anzahl solcher unerwünschten Wechsel zu verringern.

Nach Beendigung des ersten Betriebsmodus kann die Steuervorrichtung mit der Steuerung des Fahrantriebs im zweiten Betriebsmodus fortfahren. Der Beginn der Steuerung des Fahrantriebs im zweiten Betriebsmodus kann vorteilhaft ebenfalls von einer die Auslenkung des Fahrschalters verändernden Bewegung, insbesondere Betätigung, des Fahrschalters abhängig sein. Um einen definierten Ausgangszustand für den Beginn der Steuerung des Fahrantriebs im zweiten Betriebsmodus bereitstellen zu können, kann die Bewegung bzw. Betätigung des Fahrschalters, mit welchem der erste Betriebsmodus beendet wird, von der Bewegung bzw. Betätigung verschieden sein, mit welcher eine Steuerung des Fahrantriebs im zweiten Betriebsmodus beginnt.

Grundsätzlich kann die Bewegung bzw. Betätigung des Fahrschalters, welche eine Beendigung des ersten Betriebsmodus bewirkt, eine beliebige Bewegung des Fahrschalters sein, etwa eine Bewegung orthogonal zu einer Bewegung bzw. Betätigung, welche einen Antrieb in die Vorwärtsfahrt- oder Rückwärtsfahrtrichtung bewirkt. Es hat sich jedoch als vorteilhaft herausgestellt, wenn die Bewegung des Fahrschalters, welche eine Beendigung des ersten Betriebsmodus bewirkt, in keine andere Richtung erfolgt als die Bewegung des Fahrschalters, um einen Antrieb in die Vorwärtsfahrt- oder Rückwärtsfahrtrichtung zu bewirken.

Bevorzugt ist die Steuervorrichtung dazu ausgebildet, dann den ersten Betriebsmodus zu beenden, wenn eine bereits erreichte Auslenkung des Fahrschalters betragsmäßig verringert wird. Dies bedeutet im oben beschriebenen bevorzugten Fall einer Soll-Fahrgeschwindigkeit als der ersten Bewegungsgröße, dass immer dann, wenn der Maschinenführer den Fahrantrieb durch den Fahrschalter im ersten Betriebsmodus steuert und eine einmal gewählte Auslenkung betragsmäßig um wenigstens einen vorbestimmten Toleranzweg reduziert, etwa weil die Bodenbearbeitungsmaschine die im ersten Betriebsmodus durch den Maschinenführer mittels einer Auslenkung des Fahrschalters angezeigte Soll-Fahrgeschwindigkeit erreicht hat, die Steuervorrichtung automatisch den ersten Betriebsmodus beendet. Eine Folge der Beendigung des ersten Betriebsmodus ist, dass eine weitere Veränderung der Auslenkung des Fahrschalters keine Veränderung des Fahrzustands der Bodenbearbeitungsmaschine gemäß dem ersten Zuordnungszusammenhang mehr bewirkt.

Bevorzugt bleibt die Auslenkung des Fahrschalters nach dem Ende des ersten Betriebsmodus durch die Steuervorrichtung so lange unberücksichtigt, bis der Fahrschalter eine vorbestimmte Stellung, vorzugsweise die Bezugsstellung, erreicht hat. So kann erreicht werden, dass eine Veränderung des Fahrzustands der Bodenbearbeitungsmaschine auf Grundlage einer Auslenkung des Fahrschalters ausgehend von der vorbestimmten Stellung erfolgt, die deshalb bevorzugt die Bezugsstellung ist. Es ist außerdem nicht davon auszugehen, dass der Maschinenführer, der im ersten Betriebsmodus einen gewünschten Fahrzustand der Bodenbearbeitungsmaschine erreicht hat, mit der Verringerung der Auslenkung um wenigstens den Toleranzweg eine Veränderung des Fahrzustandes einzuleiten wünscht. Dies gilt vor allem, solange die Auslenkung des Fahrschalters weiter verringert wird. Erst recht nicht wird der Maschinenführer in dieser Situation einen Steuerungseingriff der Steuervorrichtung auf Grundlage der wenigstens um den Toleranzweg reduzierten Auslenkung, jedoch nach Maßgabe des vom ersten verschiedenen zweiten Zuordnungszusammenhang wünschen. Wenngleich eine auch solche Ausbildung der Steuervorrichtung grundsätzlich von der vorliegenden Erfindung umfasst sein kann, wäre sie wenig intuitiv.

Ab der Rückkehr des Fahrschalters in die vorbestimmte Stellung, vorzugsweise die Bezugsstellung, oder/und ab einer erneuten Veränderung der Auslenkung des Fahrschalters hin zu betragsmäßig größeren Auslenkungen kann die Steuervorrichtung den Fahrantrieb im zweiten Betriebsmodus steuern. Denn sowohl eine Auslenkung des Fahrschalters aus der Bezugsstellung als auch eine Umkehr der Bewegungsrichtung des Fahrschalters von einer Bewegung zur Bezugsstellung hin zu einer Bewegung von der Bezugsstellung weg können den Willen des Maschinenführers anzeigen, eine Änderung des Fahrzustands zu bewirken.

Der Maschinenführer kann dann bis auf weiteres mit der Auslenkung des Fahrschalters den Fahrantrieb der Bodenbearbeitungsmaschine gemäß dem zweiten Zuordnungszusammenhang steuern und damit insbesondere mit der Auslenkung des Fahrschalters in die entsprechende Richtung die Fahrbeschleunigung bzw. Verzögerung der Bodenbearbeitungsmaschine in der der Auslenkrichtung zugeordneten Bewegungsrichtung eingeben.

Es kann im Rahmen der Erfindung vorteilhaft sein, dem Maschinenführer zu gestatten, den Fahrzustand der Bodenbearbeitungsmaschine nach Erreichen einer lokal-maximalen Auslenkung im ersten Betriebsmodus weiterhin im ersten Betriebsmodus zu korrigieren oder den Fahrantrieb der Bodenbearbeitungsmaschine weiterhin in einem vorgegebenen Rahmen im ersten Betriebsmodus zu steuern. Hierzu kann die Steuervorrichtung einen Korrekturbereich um eine im ersten Betriebsmodus erreichte lokal-maximale Auslenkung definieren, innerhalb dessen eine Veränderung der Auslenkung des Fahrschalters eine Steuerung des Fahrantriebs im ersten Betriebsmodus bewirkt. Die erreichte lokal-maximale Auslenkung kann von der Steuervorrichtung durch Stillstand oder durch Umkehr der Bewegungsrichtung des Fahrschalters erkannt werden.

Dementsprechend ist eine lokal-maximale Auslenkung des Fahrschalters eine während einer Betätigung des Fahrschalters erreichte Fahrschalterstellung mit einem Auslenkungsbetrag, welcher nicht überschritten wird, ohne den maximalen Verstellweg des Fahrschalters auszuschöpfen.

Der Korrekturbereich umfasst bevorzugt einen von der erreichten lokal-maximalen Auslenkung ausgehenden, in Richtung von der Bezugsstellung weg verlaufenden ersten Korrekturweg. Durch Verstellung des Fahrschalters innerhalb des Korrekturbereichs längs des ersten Korrekturwegs von der erreichten lokal-maximalen Auslenkung weg kann der Maschinenführer den Fahrantrieb im ersten Betriebsmodus steuern.

Der Korrekturbereich kann einen von der erreichten lokal-maximalen Auslenkung ausgehenden, in Richtung zur Bezugsstellung hin verlaufenden zweiten Korrekturweg aufweisen. Durch Verstellung des Fahrschalters innerhalb des Korrekturbereichs längs des zweiten Korrekturwegs in Richtung von der erreichten lokal-maximalen Auslenkung weg kann der Maschinenführer den Fahrantrieb im ersten Betriebsmodus steuern. Dabei haben in der Regel die Verstellungen längs des ersten und des zweiten Korrekturwegs ausgehend von einer erreichten lokal-maximalen Auslenkung gegenteilige Wirkung, entsprechend ihren entgegengesetzten Verstellrichtungen. Beispielsweise kann eine Verstellung des Fahrschalters längs des ersten Korrekturwegs von der erreichten lokal-maximalen Auslenkung weg den Fahrantrieb zu höheren Geschwindigkeiten verstellen, eine Verstellung des Fahrschalters längs des zweiten Korrekturwegs von der erreichten lokal-maximalen Auslenkung weg zu niedrigeren Geschwindigkeiten.

Der erste und der zweite Korrekturweg können gleich groß oder unterschiedlich groß sein. Der erste Korrekturweg kann bis zur maximal möglichen Auslenkung des Fahrschalters reichen, aber nicht über die maximal mögliche Auslenkung, also den maximal möglichen Verstellweg des Fahrschalters, hinaus. Der zweite Korrekturweg kann bis zur Bezugsstellung reichen, aber bevorzugt nicht über die Bezugsstellung hinaus. Weiter bevorzugt ist der zweite Korrekturweg nicht größer als der Toleranzweg, besonders bevorzugt kleiner als dieser. Dann, wenn der zweite Korrekturweg kleiner als der Toleranzweg ist, hat bevorzugt eine Verstellung des Fahrschalters über den zweiten Korrekturweg, aber nicht über den Toleranzweg hinaus keine Wirkung auf den Fahrantrieb. Sie beendet auch den ersten Betriebsmodus nicht.

Eine Auslenkung des Fahrschalters ausgehend von der erreichten lokal-maximalen Auslenkung über den ersten Korrekturweg hinaus bewirkt bevorzugt keine Veränderung der Fahrgeschwindigkeit. Weiter optional kann die Steuervorrichtung auch bei Überschreiten des ersten Korrekturwegs die Steuerung des Fahrantriebs im ersten Betriebsmodus beenden. Insofern kann ein Verlassen des Korrekturbereichs auf Seiten des ersten Korrekturwegs in Richtung von der Bezugsstellung weg die gleiche Wirkung auf die Steuerung des Fahrantriebs durch die Steuervorrichtung haben, wie ein Überschreiten des Toleranzwegs bei einer Verstellung des Fahrschalters zur Bezugsstellung hin.

Der erste oder/und der zweite Korrekturweg oder/und der Toleranzweg kann bzw. können ein absoluter Strecken- oder Winkelbetrag der Auslenkung sein, der in dem Datenspeicher der Steuervorrichtung hinterlegt ist. Der erste oder/und der zweite Korrekturweg oder/und der Toleranzweg kann bzw. können ein auf den Auslenkungsbetrag der erreichten lokal-maximalen Auslenkung im ersten Betriebsmodus anzuwendender Anteilsbetrag, etwa ein Prozentanteil, wie beispielsweise 50 %, 40 %, 30 %, 20 %, 10 %, 5 % oder 3 %, sein, der in dem Datenspeicher der Steuervorrichtung hinterlegt ist. Im letztgenannten Fall ist bzw. sind der erste oder/und der zweite Korrekturweg oder/und der Toleranzweg betragsmäßig abhängig vom Betrag der erreichten lokal-maximalen Auslenkung.

Der erste Korrekturweg kann stets bis zum Ort der maximal möglichen Auslenkung reichen. Der erste Korrekturweg kann null sein, beispielsweise falls über ein Anfahren aus dem Stand hinaus keine langdauernde Geschwindigkeitssteuerung im ersten Betriebsmodus gewünscht ist.

Der zweite Korrekturweg kann in einer bevorzugten Ausführungsform null sein, wenn der Fahrantrieb im ersten Betriebsmodus nur in einem Sinn gesteuert werden soll, etwa nur hin zu höheren Fahrgeschwindigkeiten.

Der Maschinenführer kann nacheinander unterschiedliche Auslenkungen erreichen, die jeweils durch Stillstand oder durch Bewegungsumkehr des ausgelenkten Fahrschalters von der Steuervorrichtung erfassbar sind. Insbesondere im Falle der letztgenannten bevorzugten Ausführungsform, deren Korrekturbereich nur einen ersten Korrekturweg aufweist und sich deshalb nur von der jeweils erreichten lokal-maximalen Auslenkung in Richtung von der Bezugsstellung weg erstreckt, liegen zeitlich aufeinanderfolgende erreichte lokal-maximale Auslenkungen des Fahrschalters zunehmend weiter von der Bezugsstellung entfernt. Eine Verringerung des Auslenkungsbetrags des Fahrschalters ausgehend von einer einmal erreichten lokal-maximalen Auslenkung um weniger als den Toleranzweg bleibt ohne Auswirkung auf den Fahrantrieb und beendet den ersten Betriebsmodus nicht. Erst wenn die zuvor erreichte lokal-maximale Auslenkung des Fahrschalters in Richtung von der Bezugsstellung weg um weniger als den ersten Korrekturweg überschritten wird, führt die Auslenkung des Fahrschalters vermittels der Steuervorrichtung zu einer der Auslenkung des Fahrschalters entsprechenden Änderung der Betriebssituation des Fahrantriebs.

Werden nacheinander mehrere lokal-maximale Auslenkungen des Fahrschalters erreicht, weist bevorzugt jede dieser Auslenkungen einen eigenen Korrekturbereich auf. Der Korrekturbereich kann so mit den jeweils erreichten lokal-maximalen Auslenkungen mitwandern, gegebenenfalls unter Anpassung seiner Größe. Alternativ kann der Korrekturbereich nur an der ersten oder an einer vorbestimmten von mehreren erreichten lokal-maximalen Auslenkung definiert sein und von der Steuervorrichtung berücksichtigt werden.

Zur Konfiguration der Bodenbearbeitungsmaschine auf die Fähigkeiten und Vorlieben des jeweiligen Maschinenführers können die den ersten oder/und den zweiten Korrekturweg oder/und den Toleranzweg definierenden Parameter durch den Maschinenführer in die Steuervorrichtung eingegeben werden. Daher kann die Steuervorrichtung bevorzugt eine Eingabevorrichtung aufweisen.

Bevorzugt weist der Fahrschalter eine Neutralstellung auf, wobei die Steuervorrichtung den Fahrantrieb weder beschleunigend noch verzögernd ansteuert, solange sich der Fahrschalter in der Neutralstellung befindet. Weiter bevorzugt ist der Fahrschalter in die Neutralstellung vorgespannt und kehrt in diese zurück, wenn der Maschinenführer oder sonst eine Person oder Vorrichtung keine Betätigungskraft oder kein Betätigungsmoment auf den Fahrschalter ausübt. Dies erleichtert die Arbeit des Maschinenführers erheblich. Dies erleichtert außerdem die Einrichtung von mehreren Bedienplätzen mit jeweils einem zur Steuerung des Fahrbetriebs ausgebildeten Fahrschalter, welche sich dann, wenn der Maschinenführer den Bedienplatz wechselt und an keinem Fahrschalter angreift, alle einheitlich in der Neutralstellung befinden. Weiter bevorzugt ist daher die Neutralstellung die oben genannte Bezugsstellung, gegenüber welcher die Auslenkung hinsichtlich Betrag und Richtung durch die Steuervorrichtung bzw. durch wenigstens einen eine Stellung des Fahrschalters erfassenden und mit der Steuervorrichtung kooperierenden Stellungssensor ermittelt wird.

Nachdem zuvor der bevorzugte Wechsel vom ersten in den zweiten Betriebsmodus beschrieben wird, wird nachfolgend der bevorzugte Wechsel in den ersten Betriebsmodus, bevorzugt vom zweiten in den ersten Betriebsmodus, beschrieben:
Grundsätzlich kann, wie oben bereits dargelegt, die Umschaltung, insbesondere vom zweiten Betriebsmodus, in den ersten Betriebsmodus durch den bereits genannten Umschalter gezielt durch die Maschinenführer erfolgen. Zur Entlastung des Maschinenführers ist die Steuervorrichtung bevorzugt zusätzlich oder alternativ dazu ausgebildet, abhängig vom Fahrzustand der Bodenbearbeitungsmaschine und abhängig von der Betätigungsstellung bzw. der Auslenkung des Fahrschalters den zweiten Betriebsmodus zu beenden und bevorzugt mit einer Steuerung des Fahrantriebs im ersten Betriebsmodus zu beginnen. Eine solche Änderung der Betriebsmodi durch die Steuervorrichtung kann automatisiert ohne gewillkürte Betätigung des Umschalters durch den Maschinenführer erfolgen. So kann nach Beendigung des zweiten Betriebsmodus die nächste Betätigung des Fahrschalters, insbesondere die nächste Auslenkung aus der Bezugsstellung heraus, eine Steuerung des Fahrantriebs im ersten Betriebsmodus bewirken.

In dem bevorzugten Fall, dass der erste Betriebsmodus zum Anfahren der Bodenbearbeitungsmaschine aus dem Stillstand verwendet wird, ist die Steuervorrichtung bevorzugt dazu ausgebildet, dann mit einer Steuerung des Fahrantriebs im ersten Betriebsmodus zu beginnen, wenn die Bodenbearbeitungsmaschine eine Fahrgeschwindigkeit aufweist, welche nicht höher als eine vorbestimmte Schwellengeschwindigkeit ist, und der Fahrschalter sich in der Neutralstellung befindet. Bevorzugt ist die vorbestimmte Schwellengeschwindigkeit null, also der Stillstand der Bodenbearbeitungsmaschine. Dann nämlich ist jede Betätigung des Fahrschalters ein Anfahren der Bodenbearbeitungsmaschine.

Grundsätzlich kann die Steuervorrichtung mehr als nur den oben genannten ersten und zweiten Betriebsmodus aufweisen. Für eine möglichst schnell erlernbare oder sogar intuitive Betätigung des Fahrschalters für eine Fahrsteuerung der Bodenbearbeitungsmaschine ist es jedoch bevorzugt, wenn die Steuervorrichtung nur den ersten und den zweiten Betriebsmodus aufweist, wie sie oben beschrieben und weitergebildet wurden.

Eine bevorzugte Anwendung findet die oben beschriebene Bedienvorrichtung an einer Bodenbearbeitungsmaschine mit wenigstens zwei mit räumlichem Abstand voneinander angeordneten, jeweils aus einer Bezugsstellung auslenkbaren Fahrschaltern. Bevorzugt wirkt jeder Fahrschalter mit der Steuervorrichtung zusammen, um den Fahrantrieb nach Maßgabe der erfassten Auslenkung einer der beiden Fahrschalter anzusteuern, um eine Fahrbewegung zu bewirken. Grundsätzlich ist auch denkbar, dass jeder Fahrschalter mit einer eigenen Steuervorrichtung zusammenwirkt. Bevorzugt ist jedoch die Anordnung einer Steuervorrichtung für alle Fahrschalter der Bodenbearbeitungsmaschine, sodass nur eine einzige Steuervorrichtung den Fahrantrieb der Bodenbearbeitungsmaschine ansteuert, diese Steuervorrichtung jedoch Befehlseingaben durch mehrere Fahrschalter erhalten kann. Im Regelbetrieb ist selbst bei mehreren vorhandenen Fahrschaltern stets nur einer betätigt, da der Maschinenführer immer nur an einem Bedienplatz gleichzeitig arbeiten kann.

Grundsätzlich ist es im Rahmen der vorliegend vorgestellten Erfindung denkbar, dass auch der Betriebszustand der Bodenbearbeitungsvorrichtung bei der Wahl des Betriebsmodus der Steuervorrichtung zur Steuerung der Fahrbewegung berücksichtigt wird, etwa ob die Bodenbearbeitungsvorrichtung sich gerade in einem, insbesondere abtragenden, Eingriff mit dem Boden befindet oder nicht. Um den Maschinenführer, der sich mit der Bedienung der Maschine an ein bestimmtes Maschinenverhalten gewöhnt, nicht mit einer unnötig hohen Anzahl an Wechselbedingungen für einen Wechsel zwischen den Betriebsmodi der Steuervorrichtung zu überfordern, ist die Steuervorrichtung bevorzugt dazu ausgebildet, den ersten oder/und den zweiten Betriebsmodus unabhängig von einem Betriebszustand der Bodenbearbeitungsvorrichtung als aktiven Betriebsmodus auszuwählen.

Bevorzugt überträgt die vorliegende Bodenbearbeitungsmaschine Daten mittels eines für Fahrzeuge bewährten Datenbusses, etwa eines CAN-Busses. Abhängig von der Funktionsweise des gewählten Datenbusses kann die Steuervorrichtung durch den Datenbus Informationen, etwa Sensorinformationen, nicht kontinuierlich, sondern getaktet erhalten. Eine Stellung des Fahrschalters wird daher in diesen Fällen von der Steuervorrichtung systeminhärent mit einer wenigstens durch die Taktung der Informationsübertragung bedingten Unschärfe erfasst. Jede in der vorliegenden Anmeldung genannte Stellung des Fahrschalters ist daher als Anordnung des Fahrschalters in einem Unschärfebereich um die genannte Stellung zu verstehen. Der Unschärfebereich kann in jede Auslenkrichtung des Fahrschalters beispielsweise 1 %, vorzugsweise 0,8 %, des maximalen Auslenkwegs des Fahrschalters in die jeweilige Richtung betragen.

Wenn der Fahrschalter in die Bezugsstellung, welche vorzugsweise die Neutralstellung ist, vorgespannt ist, kann sich mit der Zeit ein Bewegungsspiel des Fahrschalters an der Bezugsstellung einstellen. Jede Stellung des Fahrschalters, welcher dieser ohne äußere Kraftausübung durch den Maschinenführer unter Einwirkung der Vorspannung in die Bezugsstellung einnimmt, ist Bezugsstellung im Sinne der vorliegenden Anmeldung. Bevorzugt weist der Fahrschalter um seine Bezugsstellung einen Spiel-Kompensationsbereich auf, aus welchem der Fahrschalter erst hinausbewegt werden muss, bevor die Steuervorrichtung auf Grundlage der Auslenkung des Fahrschalters den Fahrantrieb ansteuert. Der Spiel-Kompensationsbereich kann in jede Auslenkrichtung des Fahrschalters beispielsweise 1 %, vorzugsweise 1,5 %, des maximalen Auslenkwegs des Fahrschalters in die jeweilige Richtung betragen.

Um Fehlbedienungen des Fahrschalters zu vermeiden ist für den Fahrschalter in Richtung einer Bewegung bzw. Betätigung, welche Änderung der Fahrgeschwindigkeit in der Vorwärtsfahrt- oder der Rückwärtsfahrtrichtung bewirkt, bevorzugt nur eine Schaltgasse und besonders bevorzugt keine Schaltgasse vorgesehen. Ein Fahrschalter ohne Schaltgasse kann vorteilhaft sowohl unabhängig vom aktiven Betriebsmodus als auch unabhängig von seiner Auslenkung längs der Bewegungsrichtung zur Änderung der Fahrgeschwindigkeit orthogonal zu dieser Bewegungsrichtung ausgelenkt werden, um die Fahrtrichtung zu ändern, wie es oben bereits beschrieben ist.

Bevorzugt gilt dies für jeden Fahrschalter der Bodenbearbeitungsmaschine, welcher mit der Steuervorrichtung zusammenwirkt, um den Fahrantrieb nach Maßgabe der erfassten Auslenkung einer der beiden Fahrschalter zur Änderung der Fahrgeschwindigkeit anzusteuern.

Die vorliegende Erfindung wird nachfolgend anhand der beiliegenden Figuren näher erläutert. Es stellt dar:
- Figur 1: eine grobschematische Seitenansicht einer Bodenbearbeitungsmaschine gemäß einer Ausführungsform der vorliegenden Erfindung,
- Figur 2: eine Vorderansicht des Bedienpults der Bodenbearbeitungsmaschine von Figur 1 mit beiden Bedienpaneelen in der Bedienstellung,
- Figur 3: eine grobschematische Ansicht einer Bedienvorrichtung, deren Fahrschalter sich bei stillstehender Maschine in der Bezugsstellung befindet,
- Figur 4: die Bedienvorrichtung von Fig. 3 mit einem in einem ersten Betriebsmodus der Steuervorrichtung der Bedienvorrichtung zum Anfahren in Vorwärtsfahrtrichtung ausgelenkten Fahrschalter der Bedienvorrichtung,
- Figur 5: die Bedienvorrichtung der Fig. 3 und 4 mit zurückgenommener Auslenkung des Fahrschalters und dadurch bewirkter Beendigung des ersten Betriebsmodus,
- Figur 6: die Bedienvorrichtung der Fig. 3 bis 5 mit dem Fahrschalter in der Bezugsstellung und der Steuervorrichtung im zweiten Betriebsmodus,
- Figur 7: die Bedienvorrichtung der Fig. 3 bis 6 mit der Steuervorrichtung im zweiten Betriebsmodus und mit dem Fahrschalter ausgelenkt zur Fahrbeschleunigung in Vorwärtsfahrtrichtung,
- Figur 8: die Bedienvorrichtung der Fig. 3 bis 7 mit dem Fahrschalter in der Bezugsstellung und der Steuervorrichtung im zweiten Betriebsmodus,
- Figur 9: die Bedienvorrichtung der Fig. 3 bis 8 mit der Steuervorrichtung im zweiten Betriebsmodus und mit dem Fahrschalter ausgelenkt zur Fahrbeschleunigung in Rückwärtsfahrtrichtung bzw. zur Verzögerung der Vorwärtsfahrt,
- Figur 10: die Bedienvorrichtung der Fig. 3 bis 9 mit zum Stillstand verzögerter Bodenbearbeitungsmaschine und mit dem Fahrschalter in der Bezugsstellung und dadurch bewirktem Umschalten der Steuervorrichtung von dem zweiten Betriebsmodus in den ersten Betriebsmodus,
- Figur 11: einen beispielhaften ersten Zuordnungszusammenhang zwischen der Auslenkung des Fahrschalters und einer Soll-Geschwindigkeit als einer ersten Betriebsgröße,
- Figur 12: einen beispielhaften zweiten Zuordnungszusammenhang zwischen der Auslenkung des Fahrschalters und einer Soll-Beschleunigung als einer zweiten Betriebsgröße, und
- Figur 13: einen beispielhaften dritten Zuordnungszusammenhang zwischen der Auslenkung des Fahrschalters und einer Soll-Beschleunigung als einer zweiten Betriebsgröße.

Die Figuren sind nicht maßstabsgerecht.

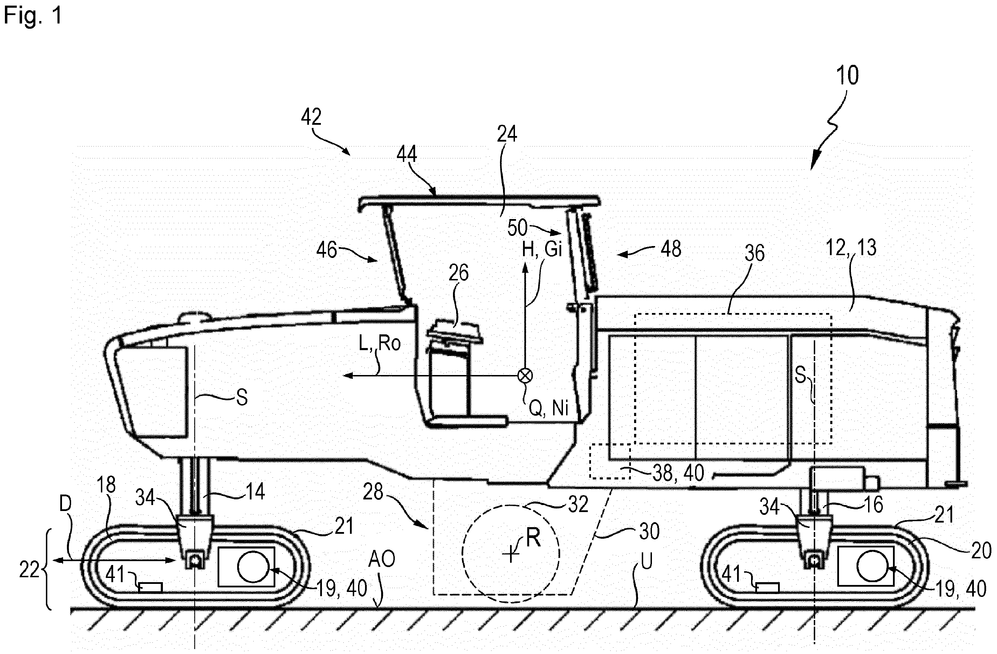

In Figur 1 ist eine erfindungsgemäße Ausführungsform einer Bodenbearbeitungsmaschine in Gestalt einer Boden- oder Straßen-Großfräse allgemein mit 10 bezeichnet. Sie umfasst einen Maschinenrahmen 12, welcher das Grundgerüst für einen Maschinenkörper 13 bildet. Der Maschinenkörper 13 umfasst den Maschinenrahmen 12 und mit dem Maschinenrahmen 12 verbundene, gegebenenfalls relativ zu diesem bewegliche Bauteile der Maschine 10.

Der Maschinenkörper 13 umfasst vordere Hubsäulen 14 und hintere Hubsäulen 16, welche einenends mit dem Maschinenrahmen 12 und anderenends mit vorderen Laufwerken 18 bzw. mit hinteren Laufwerken 20 mittels einer jeweiligen Laufwerk-Verbindungsstruktur 34, etwa einer das Laufwerk in Maschinenquerrichtung Q übergreifenden Verbindungsgabel, um eine zur jeweiligen Umlaufachse einer am Laufwerk 18 bzw. 20 umlaufenden Raupe 21 parallele Neigeachse neigbar verbunden sind. Die Laufwerke 18 und 20 sind im Wesentlichen identisch aufgebaut und bilden das Fahrwerk 22 der Maschine. Der Abstand des Maschinenrahmens 12 von den Laufwerken 18 und 20 ist durch die Hubsäulen 14 und 16 veränderbar.

In der Seitenansicht von Figur 1 nicht zu erkennen ist, dass die Maschine 10 sowohl in ihrem vorderen Endbereich als auch in ihrem hinteren Endbereich jeweils zwei Hubsäulen 14 bzw. 16 mit jeweils einem damit verbundenen Laufwerk 18 bzw. 20 aufweist.

Die Laufwerke 18 und 20 sind beispielhaft als Raupenlaufwerke mit jeweils einer zu einer Umlaufbewegung geführten Raupe 21 dargestellt. Einzelne oder alle Laufwerke 18 oder/und 20 können abweichend hiervon auch Radlaufwerke sein. Die Laufwerke 18 und 20 sind motorisch angetrieben, in der Regel durch einen am jeweiligen Laufwerk selbst vorgesehenen Hydromotor 19.

Die Bodenbearbeitungsmaschine 10 ist längs der durch den Doppelpfeil D angedeuteten Laufrichtungen zur Bewegung antreibbar

Der Betrachter von Figur 1 blickt auf die Bodenbearbeitungsmaschine oder kurz "Maschine" 10 in Richtung der zur Zeichenebene von Figur 1 orthogonalen Maschinenquerrichtung Q. Eine zur Maschinenquerrichtung Q orthogonale Maschinenlängsrichtung ist mit L bezeichnet und verläuft parallel zur Zeichenebene von Figur 1. Eine Maschinenhöhenrichtung H verläuft ebenfalls parallel zur Zeichenebene von Figur 1 und orthogonal zur Maschinenlängs- und zur Maschinenquerrichtung L bzw. Q. Die Pfeilspitze der Maschinenlängsrichtung L in Figur 1 weist in Vorwärtsrichtung. Die Maschinenhöhenrichtung H verläuft parallel zur Gierachse Gi der Maschine 10, die Maschinenlängsrichtung L verläuft parallel zur Rollachse Ro und die Maschinenquerrichtung Q verläuft parallel zur Nickachse Ni.

Die Bodenbearbeitungsmaschine 10 weist einen Fahrstand 24 auf, von dem aus ein Maschinenführer über ein Bedienpult 26 die Maschine 10 steuern kann.

Unter dem Maschinenrahmen 12 ist eine Bodenbearbeitungsvorrichtung 28 angeordnet, hier beispielhaft als Fräsbaugruppe mit einer in einem Fräswalzenkasten 30 aufgenommenen Fräswalze 32, die um eine in Maschinenquerrichtung Q verlaufende Walzenachse R rotierbar ist, um damit während einer Bodenbearbeitung Untergrundmaterial ausgehend von der Aufstandsoberfläche AO des Untergrunds U mit einer durch die relative Höhenlage des Maschinenrahmens 12 bestimmten Frästiefe abtragen zu können.

Die Höhenverstellbarkeit des Maschinenrahmens 12 durch die Hubsäulen 14 und 16 dient auch der Einstellung der Fräs- oder allgemein Arbeitstiefe der Maschine 10 bei der Bodenbearbeitung. Alternativ oder zusätzlich kann die Fräswalze 32 relativ zum Maschinenrahmen 12 höhenverstellbar an diesem aufgenommen sein. Es handelt sich bei der beispielhaft dargestellten Bodenbearbeitungsmaschine 10 um eine Großfräse, für die die Anordnung der Fräsbaugruppe 28 in Maschinenlängsrichtung L zwischen den vorderen und den hinteren Laufwerken 18 bzw. 20 typisch ist. Derartige Großfräsen oder auch bodenabtragende Maschinen im Allgemeinen können ein Transportband aufweisen, um abgetragenes Bodenmaterial von der Maschine 10 weg zu transportieren. Ein auch bei der Maschine 10 grundsätzlich vorhandenes Transportband ist aus Gründen besserer Übersichtlichkeit in Figur 1 nicht dargestellt.

Die Antriebskraftquelle der Maschine 10 bildet eine am Maschinenrahmen 12 aufgenommene Brennkraftmaschine 36. Durch sie wird die Fräswalze 32 im dargestellten Ausführungsbeispiel zur Drehung angetrieben. Durch die Leistung der Brennkraftmaschine 36 wird außerdem an der Maschine 10, bevorzugt über ein Pumpenverteilergetriebe und eine daran angeschlossene Hydraulikpumpe 38 ein Hydraulikdruckreservoir bereitgestellt, durch welches Hydromotoren, insbesondere die Hydromotoren 19 der Laufwerke 16 und 18, und hydraulische Aktuatoren an der Maschine 10 betreibbar sind. Die Brennkraftmaschine 36 ist somit auch Quelle der Vortriebskraft der Maschine 10.

Die Hydraulikpumpe 38 bildet gemeinsam mit den Hydromotoren 19 den Fahrantrieb 40 der Maschine 10.

Die Hubsäule 14 und mit ihr das Laufwerk 18 oder/und die Hubsäule 16 und mit ihr das Laufwerk 20 sind durch eine nicht näher dargestellte Lenkvorrichtung um eine jeweilige Lenkachse S drehbar.

Der Fahrstand 24 ist von einem mittels einer Bewegungsführung 50 heb- und senkbaren Schutzdachaufbau 42 bedeckt, welcher ein Schutzdach 44 umfasst, das über eine vordere Scheibenanordnung 46 und eine hintere Wandungsanordnung 48 mit dem Maschinenrahmen 12 bzw. Maschinenkörper 13 verbunden ist.

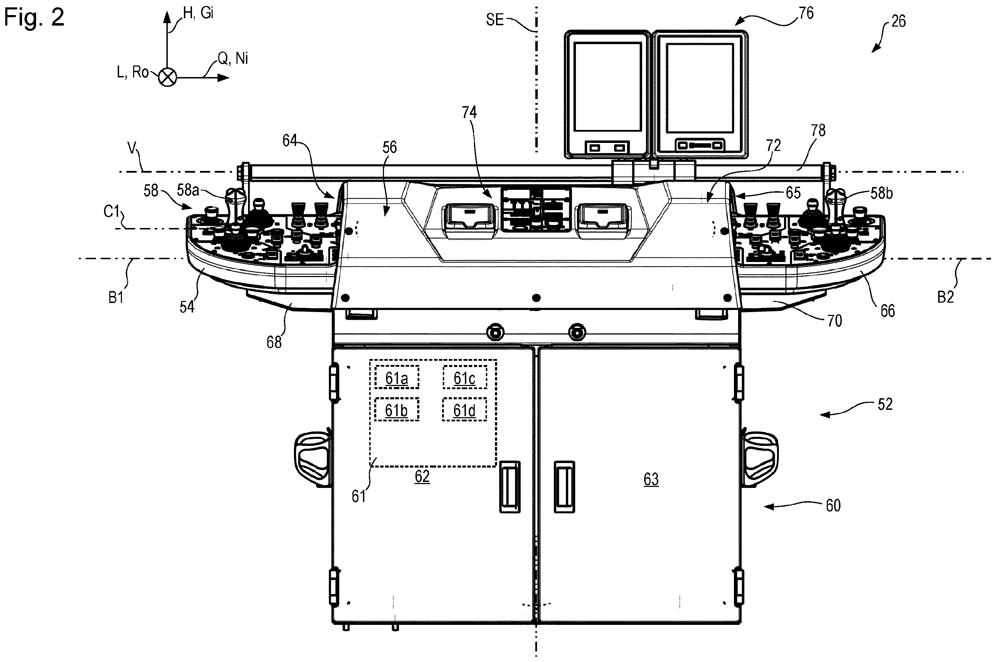

In Figur 2 ist das bezüglich einer zur Gierachse Gi und zur Rollachse Ro parallelen Spiegelsymmetrieebene SE im Wesentlichen spiegelsymmetrisch aufgebaute Bedienpult 26 in der Vorderansicht, also von einer Betrachtungsposition eines auf dem Fahrstand 24 arbeitenden Maschinenführers aus dargestellt. Das Bedienpult 26 weist einen Pultkörper 52, ein erstes Bedienpaneel 54 und ein zweites Bedienpaneel 66 auf. Beide Bedienpaneele 54 und 66 sind unabhängig voneinander gemäß der spiegelsymmetrischen Ausbildung des Bedienpultes 26 relativ zum Pultkörper 52 längs einer zur Nickachse Ni parallelen Bewegungsbahn B1 bzw. B2 durch eine jeweilige Verstauungsöffnung 64 bzw. 65 hindurch vollständig in Staufächer 56 bzw. 72 im Pultkörper 52 einführbar und aus diesen ausziehbar. Die Verstauungsöffnungen 64 und 65 sind durch jeweils einen schwenkbar am Pultkörper 52 angelenkten Deckel 68 bzw. 70 verschließbar.

Die Bedienpaneele 54 und 66 umfassen jeweils einen gleichen Satz an Bedienelementen 58. Durch die Bedienelemente 58 eines jeden Paneels aus dem ersten und dem zweiten Bedienpaneel 54 bzw. 66 ist die Bodenbearbeitungsmaschine 10 bedienbar. Die Bedienelemente 58 der Bedienpaneele 54 und 66 umfassen jeweils einen um eine im dargestellten Beispiel zur Nickachse parallele Auslenkachse C1 aus einer Neutralstellung auslenkbaren Fahrhebel 58a bzw. 58b.

Ein unterer Teil des Pultkörpers 52, welcher auf dem in Figur 2 nicht dargestellten Fahrstandboden aufsteht und an diesem befestigt ist, ist beispielsweise als Schaltschrank 60 zur Aufnahme von elektrischen Schaltungen ausgebildet. Unter anderem kann in dem Schaltschrank 60 eine mit den Bedienelementen 58 und insbesondere mit den beiden Fahrhebeln 58a und 58b und mit dem Fahrantrieb 40 signalübertragungsmäßig verbundene Steuervorrichtung 61 angeordnet sein. Zwei an dem Pultkörper 52 angelenkte Türen 62 und 63 verschließen den Schaltschrank 60.

Die Steuervorrichtung 61 kann einen Prozessor 61a, einen Datenbus 61b, einen Datenspeicher 61c oder/und eine Datenbank 61d aufweisen. Der Datenspeicher 61c kann eine Festplatte oder/und einen SSD-Speicher oder/und einen USB-Stick oder/und einen optisch lesbaren Datenspeicher oder/und wenigstens einen EPROM oder/und wenigstens einen EEPROM und dergleichen umfassen.

Die Steuervorrichtung 61 kann eine einzelne Steuervorrichtung sein oder kann mehrere verteilte Teil-Steuervorrichtungen umfassen, welche als Steuervorrichtung 61 signalübertragungsmäßig verbunden sind und zusammenwirken.

Der Datenspeicher 61c dient dazu, ein Betriebssystem der Steuervorrichtung 61 bereitzuhalten und während des Betriebs an die Steuervorrichtung 61 übertragene Daten zu speichern und gegebenenfalls zu löschen.

Der Prozessor 61a umfasst wenigstens einen integrierten Schaltkreis zur Verarbeitung von Daten des Betriebssystems und von Daten, welche während des Betriebs der Steuervorrichtung 61 an diese übertragen werden, etwa von Bedienelementen und Sensoren.

Zusätzlich zu den beiden relativ zum Pultkörper 52 translatorisch beweglichen Bedienpaneelen 54 und 56 weist der Pultkörper 52 in einem zentralen oberen Bereich ein ortsfest am Pultkörper 52 angeordnetes Zusatzbedienpaneel 74 auf. Das Zusatzbedienpaneel 74 kann als Eingabevorrichtung der Steuervorrichtung 61 dienen.

Weiter weist das Bedienpult 26 eine gesondert von den Bedienpaneelen 54 und 66 sowie gesondert von dem Zusatzbedienpaneel 74 ausgebildete Anzeigevorrichtung 76 auf. Die Anzeigevorrichtung 76, die eine Ausgabevorrichtung der Steuervorrichtung 61 ist, ist an einer Führungsschiene 78 längs einer zur Nickachse Ni parallelen Verlagerungsachse V verlagerbar und um diese schwenkbar.

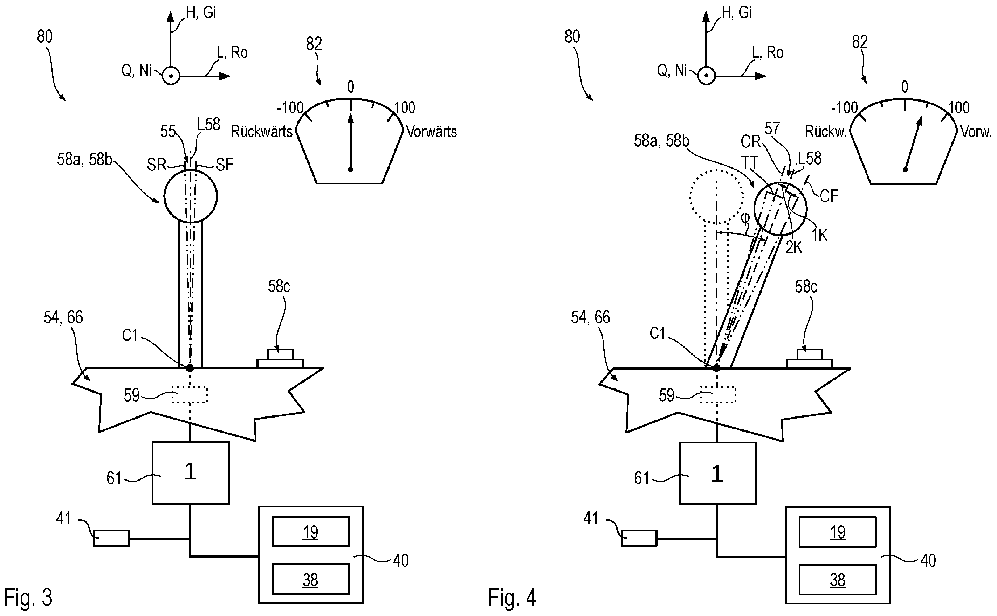

In den Figuren 3 bis 10 ist jeweils eine Bedienvorrichtung 80 der Bodenbearbeitungsmaschine 10 mit ihrem Fahrschalter 58a bzw. 58b und ihrer Steuervorrichtung 61 dargestellt. Anhand eines fiktiven Betätigungsablaufs zur Fahrsteuerung der Maschine 10 soll nachfolgend die Wirkungsweise der Bedienvorrichtung 80 der Maschine 10 illustriert werden.

In jeder der Figuren 3 bis 10 ist zusätzlich ein symbolischer Tachometer 82 dargestellt, der die am Ende der in der jeweiligen Figur dargestellten Betätigungssituation erreichte Geschwindigkeit der Maschine 10 anzeigt. Die Skala des symbolischen Tachometers 82 ist aus Gründen der leichteren Veranschaulichung eine prozentuale Skala, welche von -100 % als der maximalen Geschwindigkeit bei Rückwärtsfahrt bis zu +100% als der maximalen Geschwindigkeit bei Vorwärtsfahrt reicht. Eine Mittelstellung des Tachometers zeigt eine Geschwindigkeit von 0 %, also Stillstand der Maschine 10 an.

In der Steuervorrichtung 61 ist durch eine Ziffer jeweils der aktuelle Betriebsmodus angezeigt, in Figur 3 also durch die Ziffer "1" der erste Betriebsmodus.

Weiter ist in den Figuren 3 bis 10 jeweils grobschematisch und symbolisch angezeigt, dass die Steuervorrichtung 61 signalübertragungsmäßig mit dem Fahrantrieb 40 verbunden ist, um diesen anzusteuern, wobei der Fahrantrieb die Hydromotoren 19 der Laufwerke 18 und 20 sowie die Hydraulikpumpe 38 des Hydraulikkreislaufs der Maschine 10 umfasst. Über einen Stellungssensor 59 erfasst die Steuervorrichtung 61 Richtung und Betrag der Auslenkung des Fahrhebels 58a bzw. 58b.

Sowohl im ersten wie im zweiten Betriebsmodus erfasst die Steuervorrichtung 61 mittels des Stellungssensors 59 eine Auslenkung des Fahrschalters 58a, 58b relativ zu der in Figur 3 gezeigten Neutralstellung, in welche der Fahrschalter 58a, 58b vorgespannt ist, sodass er ohne äußere Krafteinwirkung in diese Neutralstellung zurücckehrt. Die Neutralstellung der Fahrschalter 58a, 58b ist daher deren Bezugsstellung. Der Fahrschalter 58a, 58b, wobei stets nur ein Fahrschalter der Fahrschalter 58a, 58b gleichzeitig betätigt ist, ist um die zur Maschinenquerrichtung Q parallele Auslenkachse C1 für eine Vorwärtsfahrt zum vorderen Ende der Maschine 10 hin und für eine Rückwärtsfahrt zum hinteren Ende der Maschine 10 hin auslenkbar.

Die Fahrschalter 58a, 58b können zusätzlich um eine zur Rollachse Ro parallele zweite Auslenkachse auslenkbar sein, um eine Lenkbewegung der lenkbaren Laufwerke 18 und 20 zu bewirken. Einfluss auf die Fahrgeschwindigkeit hat im vorliegenden Ausführungsbeispiel jedoch nur der Betrag der Auslenkung der Fahrschalter 58a, 58b um die Auslenkachse C1.

Die Neutralstellung der Fahrschalter 58a, 58b in Figur 3 ist durch die Längsachse L58 der Fahrschalter 58a, 58b innerhalb eines durch Schwellenauslenkungen SF in Richtung einer Vorwärtsfahrt und SR in Richtung einer Rückwärtsfahrt begrenzten Spiel-Kompensationsbereichs 55 angezeigt. Bevorzugt steuert die Steuervorrichtung 61 den Fahrantrieb 40 erst auf Grundlage einer Auslenkung von einem der Fahrschalter 58a, 58b, wenn dieser, abhängig von seiner Auslenkrichtung, über die Schwellenauslenkung SF oder SR hinaus von der Neutralstellung ausgelenkt wird. So kann sowohl eine Unschärfe in der Erfassung der Position der Fahrschalter 58a, 58b durch getaktete Abfrage des Stellungssensors 59 als auch ein sich möglicherweise mit fortschreitender Betriebsdauer einstellendes Bewegungsspiel der Fahrschalter 58a, 58b in der Neutralstellung steuerungstechnisch neutralisiert werden. Der besseren Übersichtlichkeit wegen ist der Spiel-Kompensationsbereichs 55 um die Neutralstellung nur in Fig. 3 gezeigt.

Im ersten Betriebsmodus ordnet die Steuervorrichtung 61 dem Auslenkbetrag der Fahrschalter 58a, 58b eine Soll-Fahrgeschwindigkeit zu und steuert den Fahrantrieb 40 zum Erreichen der durch den Betrag der Auslenkung eines Fahrschalters angezeigten Soll-Fahrgeschwindigkeit an. Die Richtung der Auslenkung relativ zu Neutralstellung gibt die vom Maschinenführer gewünschte Fahrtrichtung an.

Um ein unerwünschtes ruckartiges Anfahren zu vermeiden, steuert die Steuervorrichtung 61 im ersten Betriebsmodus den Fahrantrieb 40 zum Bewirken einer Fahrbeschleunigung an, welche für höhere Soll-Fahrgeschwindigkeiten größer ist als für niedrigere Soll-Fahrgeschwindigkeiten. Die von der Steuervorrichtung 61 durch entsprechende Ansteuerung des Fahrantriebs 40 bewirkte Fahrbeschleunigung kann proportional zur zu erreichenden Soll-Fahrgeschwindigkeit sein. Alternativ können unterschiedliche Stufen einer Fahrbeschleunigung programmiert sein, etwa eine niedrige, eine mittlere und eine hohe Fahrbeschleunigung, wobei auch die Soll-Fahrgeschwindigkeiten in eine entsprechende Anzahl an Abstufungen unterteilt sein können, sodass zum Erreichen einer Soll-Fahrgeschwindigkeit, welche in einer bestimmten Fahrgeschwindigkeitsstufe gelegen ist, eine Fahrbeschleunigung gewählt wird, welche der Stufe der Fahrgeschwindigkeit zugeordneten Fahrbeschleunigung entspricht. Grundsätzlich ist jedoch auch möglich, die Maschine 10 unabhängig von der durch Auslenkung eines der Fahrschalter 58a oder 58b gewählten Soll-Fahrgeschwindigkeit stets mit der gleichen Fahrbeschleunigung zu beschleunigen.

Im vorliegenden Ausführungsbeispiel werden die Laufwerke durch Hydromotoren 19 angetrieben, sodass die Steuervorrichtung 61 für zunehmende Fahrbeschleunigung zunächst zunehmend die Hydraulikpumpe 38 ansteuert, bis deren maximale Förderleistung erreicht ist. Bei erreichter maximaler Förderleistung der Hydraulikpumpe 38 steuert die Steuervorrichtung 61 für eine weitere Geschwindigkeitserhöhung der Maschine 10 die einzelnen Hydromotoren 19 an und verringert deren Schluckvolumen. Für eine Verzögerung einer fahrenden Maschine 10 steuert die Steuervorrichtung 61 den Fahrantrieb 40 in umgekehrter Reihenfolge an und erhöht erst das Schluckvolumen der Hydromotoren 19 bis zum maximalen Schluckvolumen und verringert anschließend die Förderleistung der Hydraulikpumpe 38.

In Figur 3 steht die Maschine 10 still und die Fahrschalter 58a, 58b befinden sich in ihrer Neutralstellung.

Ausweislich Figur 4 wird ausgehend von der vorhergehend eingenommenen und mit punktierter Linie angezeigten Neutralstellung einer der Fahrschalter 58a oder 58b in einer der Vorwärtsfahrtrichtung entsprechenden Auslenkrichtung um einen Auslenkwinkel φ ausgelenkt, woraufhin die Steuervorrichtung 61 den Fahrantrieb 40 zur Fahrbeschleunigung der Maschine 10 bis zum Erreichen einer dem Auslenkbetrag des ausgelenkten Fahrschalters 58a oder 58b entsprechenden Soll-Fahrgeschwindigkeit ansteuert.

Die in Fig. 4 dargestellte erreichte lokal-maximale Auslenkung des ausgelenkten Fahrschalters 58a oder 58b ist erneut durch dessen Längsachse L58 repräsentiert. Um die erste Auslenkung herum kann ein Korrekturbereich 57 definiert sein, welcher in Richtung von der Neutralstellung weg durch eine Schwellenauslenkung CF und in Richtung zur Neutralstellung hin durch eine Schwellenauslenkung CR begrenzt ist. Innerhalb des Korrekturbereichs 57 kann der Maschinenführer den ausgelenkten Fahrschalter 58a oder 58b bewegen und dadurch eine Steuerung des Fahrantriebs 40 abhängig vom Auslenkbetrag nach Maßgabe des ersten Zuordnungszusammenhangs und der Soll-Geschwindigkeit als der ersten Betriebsgröße bewirken. Bevorzugt ist der Korrekturbereich 57 betragsmäßig größer als der Spiel-Kompensationsbereich 55, um eine Steuerung des Fahrantriebs im ersten Betriebsmodus über einen durch eine getaktete Informationsübermittlung mittels des Datenbusses 61b bewirkte Unschärfebereich in der Positionserfassung des ausgelenkten Fahrschalters 58a oder 58b hinaus zu ermöglichen.

Innerhalb des Korrekturbereichs 57 ist der ausgelenkte Fahrschalter 58a oder 58b von seiner erreichten lokal-maximalen Auslenkung bis zur Schwellenauslenkung CF in Richtung von der Neutralstellung weg längs eines ersten Korrekturwegs 1K auslenkbar. Innerhalb des Korrekturbereichs 57 ist der ausgelenkte Fahrschalter 58a oder 58b von seiner erreichten lokal-maximalen Auslenkung bis zur Schwellenauslenkung CR in Richtung zur Neutralstellung hin längs eines zweiten Korrekturwegs 2K auslenkbar.

Im Beispiel von Fig. 4 ist lediglich aus Gründen der Veranschaulichung der erste Korrekturweg 1K betragsmäßig größer als der zweite Korrekturweg 2K dargestellt. Die beiden Wege 1K und 2K können auch betragsmäßig gleich groß sein oder der zweite Korrekturweg 2K kann betragsmäßig größer als der erste Korrekturweg 1K sein. Einer der beiden Wege oder beide Wege können null sein oder können lediglich einen Wert aufweisen, der gestattet zu vermeiden, dass eine zuvor beschriebene Unschärfe in der Positionserfassung des ausgelenkten Fahrschalters 58a oder 58b zu einem Steuereingriff auf den Fahrantrieb 40 führt. Wenn einer der beiden Wege 1K und 2K null ist, ist dies bevorzugt der zweite Korrekturweg 2K.

Mit TT ist ein Toleranzweg dargestellt, bei dessen Überschreiten in Richtung zur Neutralstellung hin die Steuervorrichtung 61 den ersten Betriebsmodus beendet. Abweichend von der Darstellung in Fig. 4 kann der Toleranzweg TT der gesamte Rückstellweg zurück in die Neutralstellung sein. Dann wird der erste Betriebsmodus erst beendet, wenn der Fahrschalter seine Neutralstellung erreicht.

In Figur 1 lediglich symbolisch dargestellte Geschwindigkeitssensoren 41 in jedem der Laufwerke 18 und 20 erfassen die Ist-Fahrgeschwindigkeit der Maschine 10 und melden diese an die Steuervorrichtung 61 zurück. Wenn die Steuervorrichtung 61 durch Vergleich der Ist-Fahrgeschwindigkeit mit der Soll-Fahrgeschwindigkeit ermittelt, dass die Soll-Fahrgeschwindigkeit erreicht ist, steuert die Steuervorrichtung 61 den Fahrantrieb 40 derart an, dass die erreichte Fahrgeschwindigkeit beibehalten wird.

Der symbolische Tachometer 82 in Figur 4 zeigt an, dass die durch den Betrag an Auslenkung des Fahrschalters 58a oder 58b in die Steuervorrichtung 61 eingegebene Soll-Fahrgeschwindigkeit erreicht ist.

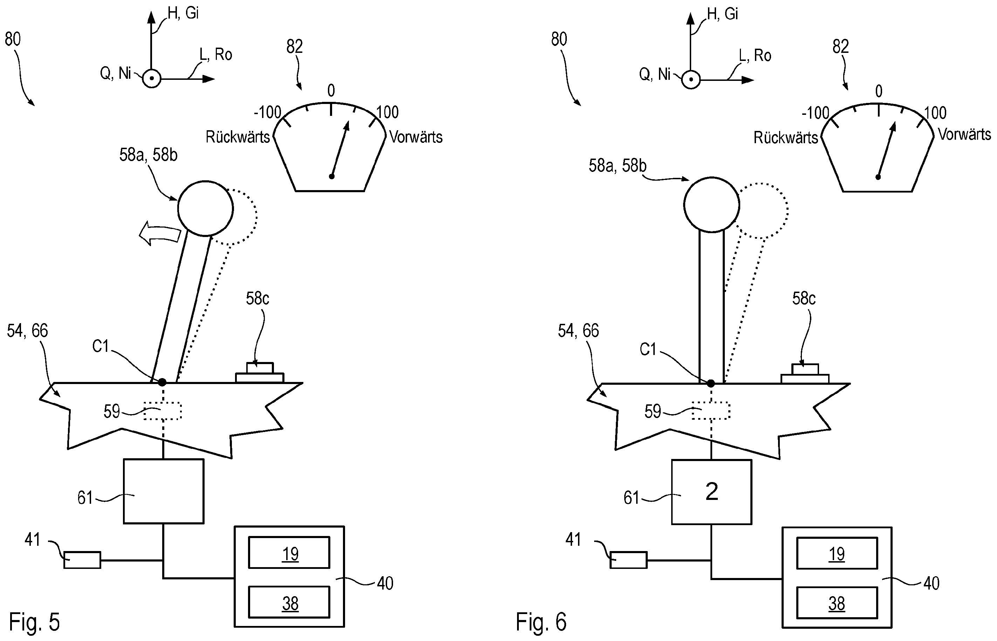

Nach Erreichen der eingegebenen Soll-Fahrgeschwindigkeit lässt der Maschinenführer den ausgelenkten Fahrschalter 58a oder 58b los, sodass dieser aufgrund seiner Vorspannung beginnt, zur Neutralstellung zurückzukehren. Diese Situation ist in Figur 5 dargestellt. Die Ausgangsposition des ausgelenkten Fahrschalters 58a oder 58b, also dessen Position in Figur 4, ist in Figur 5 punktiert dargestellt. Der ausgelenkte Fahrschalter 58a oder 58b befindet sich, getrieben durch seine entsprechende Vorspannung, in einer Bewegung zur Neutralstellung hin.

Sobald der Auslenkbetrag des ausgelenkten Fahrschalters 58a oder 58b im ersten Betriebsmodus den Toleranzweg TT erreicht oder betragsmäßig überschritten hat, beendet die Steuervorrichtung 61 den ersten Betriebsmodus.

Der ausgelenkte Fahrschalter 58a oder 58b bewirkt im dargestellten Ausführungsbeispiel bis zur Rückkehr in die Neutralstellung trotz objektiv bestehender Auslenkung aus der Neutralstellung keinen Steuerungseingriff auf den Fahrantrieb 40 und die im ersten Betriebsmodus erreichte Fahrgeschwindigkeit wird beibehalten.

Nach Erreichen der Neutralstellung, oder gegebenenfalls nach gewillkürter Umkehrung der Bewegungsrichtung des ausgelenkten Fahrschalters 58a oder 58b entgegen seiner Vorspannrichtung, ordnet die Steuervorrichtung 61 nun im zweiten Betriebsmodus dem Betrag der Auslenkung der Fahrschalter 58a, 58b eine Soll-Fahrbeschleunigung zu. Eine Zuordnung des Auslenkungsbetrags zu einer Soll-Fahrgeschwindigkeit wie im ersten Betriebsmodus erfolgt im zweiten Betriebsmodus nicht.

Die Zuordnungen von Auslenkbetrag und Soll-Fahrgeschwindigkeit und Soll-Fahrbeschleunigung können beispielsweise in dem Datenspeicher 61c der Steuervorrichtung 61 als Kennfeld, Kennlinie, Funktion, Tabelle und dergleichen hinterlegt sein.

Im zweiten Betriebsmodus wird bei Auslenkung einer der Fahrschalter 58a oder 58b die Maschine 10 mittels entsprechender Ansteuerung des Fahrantriebs 40 durch die Steuervorrichtung 61 so lange mit der Soll-Fahrbeschleunigung beschleunigt, bis der Maschinenführer den ausgelenkten Fahrschalter 58a oder 58b loslässt oder eine vorbestimmte und vorzugsweise ebenfalls im Datenspeicher 61c der Steuervorrichtung 61 hinterlegte maximale Fahrgeschwindigkeit erreicht ist. Eine Fahrbeschleunigung in Fahrtrichtung erhöht die Fahrgeschwindigkeit. Eine Fahrbeschleunigung entgegen der bestehenden Fahrtrichtung wirkt als Verzögerung und verringert die Fahrgeschwindigkeit. Wie im ersten Betriebsmodus zeigt die Richtung der Auslenkung der Fahrschalter 58a, 58b der Steuervorrichtung 61 die gewünschte Wirkrichtung der Soll-Fahrbeschleunigung an.

In Figur 6 hat der Fahrschalter 58a oder 58b die Neutralstellung erreicht. Die Maschine 10 bewegt sich mit der durch die Auslenkung des Fahrschalters 58a oder 58b im ersten Betriebsmodus erreichten Fahrgeschwindigkeit weiter. In Figur 6 ist zum Vergleich punktiert die in Figur 5 gezeigte frühere Position des ausgelenkten Fahrschalters 58a oder 58b gezeigt.

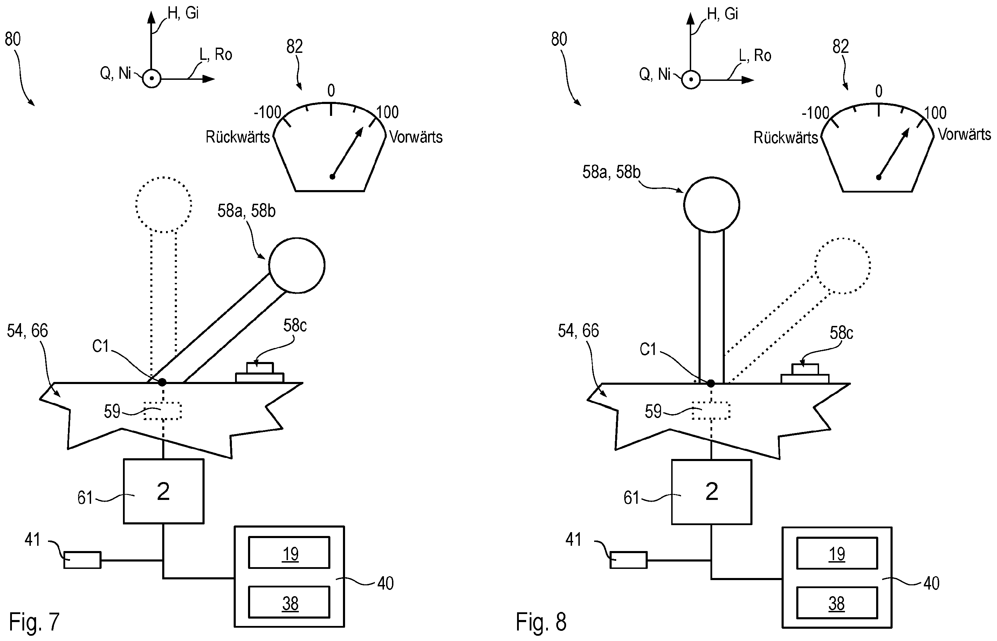

In Figur 7 hat der Maschinenführer den Fahrschalter 58a oder 58b, nun jedoch im zweiten Betriebsmodus, erneut in Vorwärtsfahrtrichtung ausgelenkt. Der Betrag der Auslenkung ist größer als zuvor im ersten Betriebsmodus. Mit einer dem Betrag der Auslenkung in der Steuervorrichtung 61 zugeordneten Fahrbeschleunigung bzw. Einstellung des Fahrantriebs 40 in Vorwärtsfahrtrichtung wird die Maschine 10 so lange beschleunigt, wie der Maschinenführer den Fahrschalter 58a oder 58b in der ausgelenkten Stellung von Figur 7 hält oder bis eine voreingestellte oder maschineninhärente Maximalgeschwindigkeit erreicht ist. Der symbolische Tachometer 82 zeigt an, dass nach einer gewissen Zeitdauer der Auslenkung eine erhöhte Fahrgeschwindigkeit der Maschine 10 erreicht ist.

Der Maschinenführer lässt den Fahrschalter 58a oder 58b nach Erreichen der von ihm gewünschten Fahrgeschwindigkeit los, sodass dieser in die in Figur 8 gezeigte Neutralstellung zurückkehrt. Zum Vergleich ist in Figur 8 punktiert die vorhergehende Stellung des Fahrschalters 58a oder 58b von Figur 7 gezeigt. Die Maschine 10 bewegt sich nun so lange mit der erreichten Fahrgeschwindigkeit in Vorwärtsfahrt weiter, wie die Fahrschalter 58a oder 58b in ihrer Neutralstellung verbleiben.

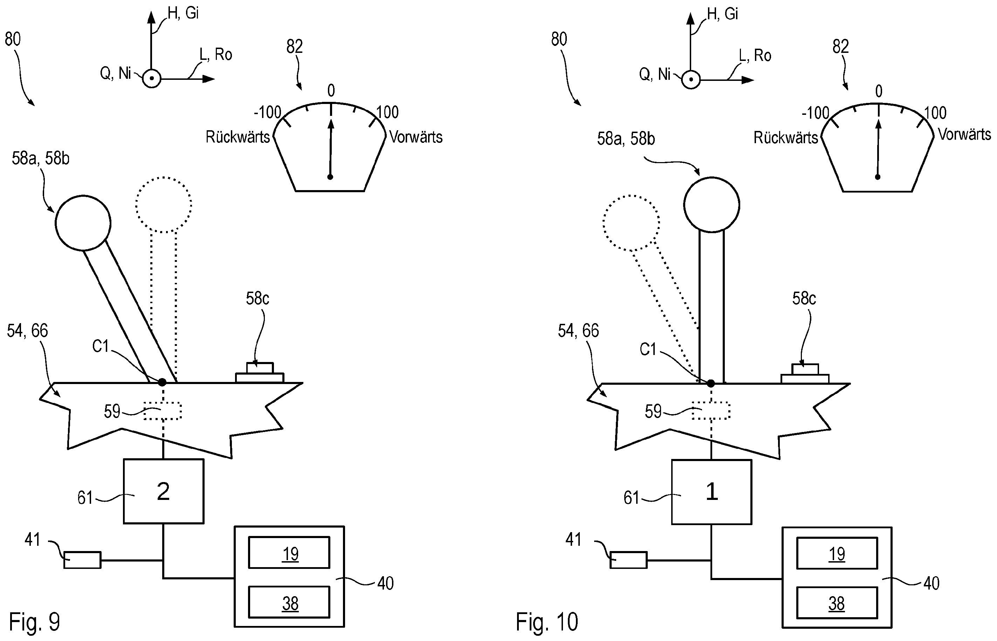

In Figur 9 ist dargestellt, dass der Maschinenführer, um die Maschine 10 abzubremsen, den Fahrschalter 58a oder 58b im zweiten Betriebsmodus in Rückwärtsfahrtrichtung ausgelenkt hat, sodass die Steuervorrichtung 61 den Fahrantrieb 40 nach Maßgabe des Auslenkungsbetrags des ausgelenkten Fahrschalters 58a oder 58b verzögert. Die Verzögerung nach Maßgabe des Auslenkungsbetrags hält für die Dauer an, in der der Maschinenführer den ausgelenkten Fahrschalter 58a oder 58b in der entgegen der aktuellen Fahrtrichtung zugeordneten Rückwärtsrichtung ausgelenkt hält.

Die Steuervorrichtung 61 ist so programmiert, dass sie trotz fortgesetzter Auslenkung des Fahrschalters 58a oder 58b einen Maschinenstillstand, also Fahrgeschwindigkeit null, nicht überfährt, sondern den Fahrantrieb bei Erreichen einer Fahrgeschwindigkeit null wirkungslos stellt, sodass die Maschine 10 bis zur erneuten Eingabe eines Fahrbefehls durch einen der Fahrschalter 58a oder 58b stillsteht. Diese Situation zeigt Figur 9, da der symbolische Tachometer 82 bereits den Stillstand der Maschine 10 anzeigt. Punktiert ist in Figur 9 die vorhergehende Stellung des ausgelenkten Fahrschalters 58a oder 58b von Figur 8 gezeigt.

In Figur 10 hat der Maschinenführer den zuvor ausgelenkten Fahrschalter 58a oder 58b losgelassen, sodass dieser aufgrund seiner Vorspannung in seine Neutralstellung zurückgekehrt ist. Durch Erreichen der Neutralstellung bei gleichzeitigem Stillstand der Maschine 10 kehrt die Steuervorrichtung 61 automatisch in den ersten Betriebszustand zurück, sodass das nächste Anfahren, egal in welche Fahrtrichtung, der Maschine 10 wieder im ersten Betriebsmodus erfolgen wird.

Für einen Rangierbetrieb kann in der Steuervorrichtung 61 durch einen gesonderten Umschalter 58c, der lediglich beispielhaft als Druckknopf dargestellt ist, dauerhaft der erste oder der zweite Betriebsmodus aktiviert werden und bis zur erneuten Betätigung des Umschalters 58c aktiviert bleiben. Der Umschalter 58c ist an beiden Bedienpaneelen 54 und 66 vorhanden. Anstelle des lediglich beispielhaft gezeigten Umschalters 58c kann ein Betriebsmodus-Wahlschalteranordnung körperlich oder als Bildschirmdarstellung an einem Touchscreen realisiert sein.

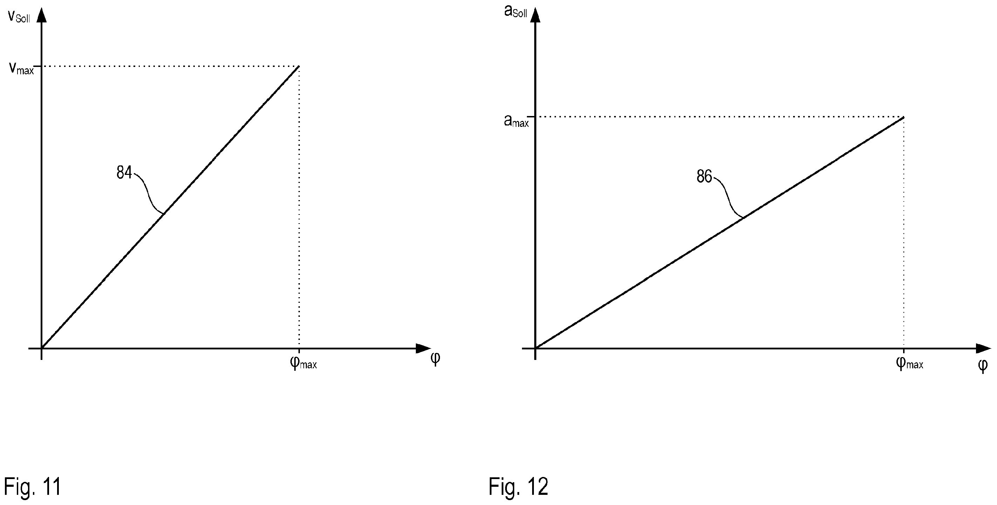

In Figur 11 ist beispielhaft ein erster Zuordnungszusammenhang 84 zwischen der Auslenkung des Fahrschalters 58a oder 58b, repräsentiert durch den Auslenkwinkel φ (s. Figur 4), und einer ersten Betriebsgröße des Fahrantriebs 40, repräsentiert durch die Fahrgeschwindigkeit v, insbesondere Soll-Fahrgeschwindigkeit v_{Soll}, dargestellt.

Der erste Zuordnungszusammenhang 84 ist linear und verknüpft den Auslenkbereich des Fahrschalters 58a oder 58b von einer Auslenkung 0 bis zu einem maximal möglichen Auslenkwinkel φₘₐₓ mit dem Geschwindigkeitsbereich des Fahrantriebs 40 vom Stillstand mit einer Geschwindigkeit 0 bis zu einer voreingestellten maximal erreichbaren Höchstgeschwindigkeit vₘₐₓ. Der erste Zuordnungszusammenhang 84 muss nicht linear sein, sondern kann progressiv oder degressiv sein.

Gemäß dem ersten Zuordnungszusammenhang 84 wird der Fahrantrieb 40 im obigen Ausführungsbeispiel im ersten Betriebsmodus nach Maßgabe der Soll-Fahrgeschwindigkeit v_{Soll} gesteuert.

In Figur 12 ist beispielhaft ein zweiter Zuordnungszusammenhang 86 zwischen der Auslenkung des Fahrschalters 58a oder 58b, erneut repräsentiert durch den Auslenkwinkel φ, und einer zweiten Betriebsgröße des Fahrantriebs 40, repräsentiert durch die Fahrbeschleunigung a, insbesondere Soll-Fahrbeschleunigung a_{Soll}, dargestellt.

Der zweite Zuordnungszusammenhang 86 ist linear und verknüpft den Auslenkbereich des Fahrschalters 58a oder 58b von einer Auslenkung 0 bis zu einem maximal möglichen Auslenkwinkel φₘₐₓ mit dem Beschleunigungsbereich des Fahrantriebs 40 von einer Beschleunigung 0 bis zu einer voreingestellten maximal erreichbaren Beschleunigung aₘₐₓ. Der zweite Zuordnungszusammenhang 86 muss nicht linear sein, sondern kann progressiv oder degressiv sein.

Gemäß dem zweiten Zuordnungszusammenhang 86 wird der Fahrantrieb 40 im obigen Ausführungsbeispiel im zweiten Betriebsmodus nach Maßgabe der Soll-Fahrbeschleunigung a_{Soll} gesteuert.

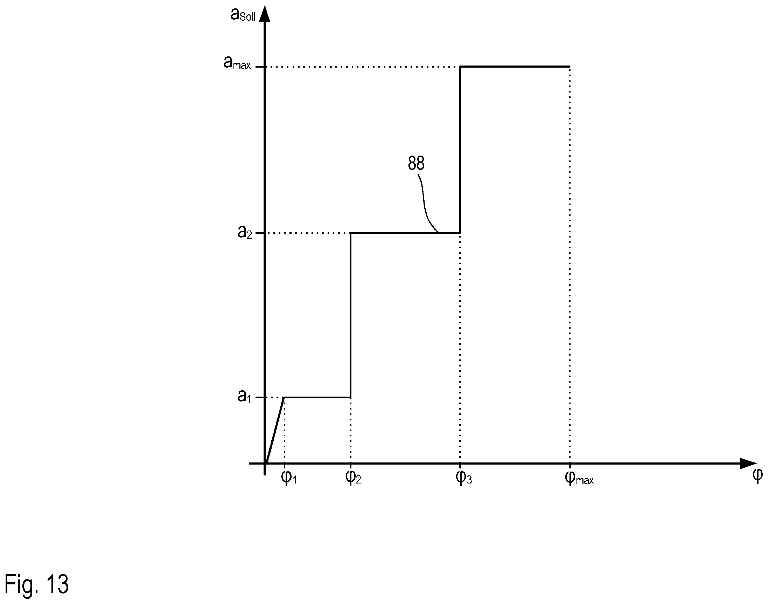

In Figur 13 ist beispielhaft ein dritter Zuordnungszusammenhang 88 zwischen der Auslenkung des Fahrschalters 58a oder 58b, wiederum repräsentiert durch den Auslenkwinkel φ, und der zweiten Betriebsgröße des Fahrantriebs 40, repräsentiert durch die Fahrbeschleunigung a, insbesondere Soll-Fahrbeschleunigung a_{Soll}, dargestellt.

Der dritte Zuordnungszusammenhang 88 ist eine Kombination aus linearem und gestuftem Zusammenhang und verknüpft den Auslenkbereich des Fahrschalters 58a oder 58b von einer Auslenkung 0 bis zu einem maximal möglichen Auslenkwinkel φₘₐₓ mit dem Beschleunigungsbereich des Fahrantriebs 40 von einer Beschleunigung 0 bis zur voreingestellten maximal erreichbaren Beschleunigung aₘₐₓ. Der dritte Zuordnungszusammenhang 88 kann eine von der in Figur 13 abweichende Charakteristik aufweisen.

Im ersten Betriebsmodus kann der Fahrantrieb 40 im obigen Ausführungsbeispiel zusätzlich gemäß dem dritten Zuordnungszusammenhang 88 nach Maßgabe einer Soll-Fahrbeschleunigung a_{Soll} gesteuert werden. Da eine von einer Ist-Geschwindigkeit abweichende Soll-Geschwindigkeit als die erste Betriebsgröße nicht ohne eine Beschleunigung zu erreichen ist, gibt der dritte Datenzusammenhang vor, mit welcher Beschleunigung die jeweils durch Auslenkung des Fahrschalters 58a oder 58b angezeigte Soll-Geschwindigkeit erreicht werden soll. Dabei liegt dem dritten Datenzusammenhang der Gedanke zugrunde, dass höhere Soll-Geschwindigkeiten mit größeren Beschleunigungen erreicht werden sollen und niedrigere Soll-Geschwindigkeiten mit geringeren Beschleunigungen.

Im Bezugszustand bzw. in der Neutralstellung, in welcher die zu erreichende Soll-Geschwindigkeit 0 ist, ist auch die Soll-Beschleunigung 0. Bis zu einer ersten geringen Auslenkung φ₁ des Fahrschalters 58a oder 58b steigt die anzuwendende Soll-Beschleunigung bis zu einer vorbestimmten Beschleunigung a₁ linear mit der Auslenkung φ des Fahrschalters 58a oder 58b an.

Ab Erreichen der Auslenkung φ₁ des Fahrschalters 58a oder 58b wird in einer unteren Auslenkzone des Fahrschalters 58a oder 58b, welche von der Auslenkung φ₁ bis zur Auslenkung φ₂ reicht, weiterhin die Beschleunigung a₁ angewendet. In einer mittleren Auslenkzone des Fahrschalters 58a oder 58b, welche von der Auslenkung φ₂ bis zur Auslenkung φ₃ reicht, wird die größere Beschleunigung a₂ angewendet. In einer oberen Auslenkzone des Fahrschalters 58a oder 58b, welche von der Auslenkung φ₃ bis zur Auslenkung φₘₐₓ reicht, wird die maximal mögliche Beschleunigung aₘₐₓ angewendet.

## Patentansprüche

1. Zur abtragenden Bodenbearbeitung ausgebildete selbstfahrende Bodenbearbeitungsmaschine (10), umfassend einen Maschinenrahmen (12), eine vom Maschinenrahmen (12) getragene Bodenbearbeitungsvorrichtung (28) mit einer mit Abtragswerkzeugen ausgerüsteten Abtragswalze (32), ein den Maschinenrahmen (12) tragendes Fahrwerk (22), einen Fahrantrieb (40), um die Bodenbearbeitungsmaschine (10) zur Fahrbewegung in eine Bewegungsrichtung anzutreiben, und eine Bedienvorrichtung (80) zur Steuerung des Fahrantriebs (40), wobei die Bedienvorrichtung (80) einen aus einer Bezugsstellung auslenkbaren Fahrschalter (58a, 58b) und eine Steuervorrichtung (61) umfasst, wobei die Steuervorrichtung (61) dazu ausgebildet ist, eine Auslenkung (φ) des Fahrschalters (58a, 58b) bezüglich der Bezugsstellung zu erfassen und den Fahrantrieb (40) nach Maßgabe der erfassten Auslenkung (φ) anzusteuern, um eine Fahrbewegung zu bewirken, wobei die Steuervorrichtung (61) umschaltbar ist zwischen einem ersten Betriebsmodus, in welchem die Steuervorrichtung (61) der Auslenkung (φ) des Fahrschalters (58a, 58b) gemäß einem ersten Zuordnungszusammenhang (84) einen Wert einer Bewegungsgröße zuordnet und den Fahrantrieb (40) steuert, und einem zweiten Betriebsmodus, in welchem die Steuervorrichtung (61) der Auslenkung (φ) des Fahrschalters (58a, 58b) gemäß einem zweiten Zuordnungszusammenhang (86) einen Wert einer Bewegungsgröße (a) zuordnet und den Fahrantrieb (40) steuert,
**dadurch gekennzeichnet, dass** die Steuervorrichtung (61) im ersten Betriebsmodus der Auslenkung (φ) des Fahrschalters (58a, 58b) gemäß dem ersten Zuordnungszusammenhang (84) einen Wert einer ersten Bewegungsgröße (v) zuordnet und den Fahrantrieb (40) nach Maßgabe der ersten Bewegungsgröße (v) steuert, und im zweiten Betriebsmodus der Auslenkung (φ) des Fahrschalters (58a, 58b) gemäß dem zweiten Zuordnungszusammenhang (86) einen Wert einer von der ersten Bewegungsgröße (v) verschiedenen zweiten Bewegungsgröße (a) zuordnet und den Fahrantrieb (40) nach Maßgabe der zweiten Bewegungsgröße (a) steuert, wobei die Steuervorrichtung (61) im zweiten Betriebsmodus den Fahrantrieb (40) nicht gemäß dem ersten Zuordnungszusammenhang (84) nach Maßgabe der ersten Bewegungsgröße (v) steuert.

2. Zur abtragenden Bodenbearbeitung ausgebildete selbstfahrende Bodenbearbeitungsmaschine (10) nach Anspruch 1,
**dadurch gekennzeichnet, dass** die erste Bewegungsgröße (v) eine Soll-Geschwindigkeit (v) der Bodenbearbeitungsmaschine (10) umfasst oder ist.

3. Zur abtragenden Bodenbearbeitung ausgebildete selbstfahrende Bodenbearbeitungsmaschine (10) nach Anspruch 1 oder 2,
**dadurch gekennzeichnet, dass** die zweite Bewegungsgröße (a) eine Soll-Fahrbeschleunigung (a) oder eine mit der Fahrbeschleunigung der Bodenbearbeitungsmaschine in Wirkzusammenhang stehende Betriebsgröße der Bodenbearbeitungsmaschine (10) umfasst oder ist.

4. Zur abtragenden Bodenbearbeitung ausgebildete selbstfahrende Bodenbearbeitungsmaschine (10) nach einem der Ansprüche 1 bis 3,
**dadurch gekennzeichnet, dass** die Steuervorrichtung (61) im ersten Betriebsmodus der Auslenkung (φ) des Fahrschalters (58a, 58b) gemäß einem dritten Zuordnungszusammenhang (88) einen Wert der zweiten Bewegungsgröße (a) zuordnet und den Fahrantrieb (40) auch nach Maßgabe der zweiten Bewegungsgröße (a) steuert.

5. Zur abtragenden Bodenbearbeitung ausgebildete selbstfahrende Bodenbearbeitungsmaschine (10) nach Anspruch 4,
**dadurch gekennzeichnet, dass** der dritte Zuordnungszusammenhang (88) der zweite Zuordnungszusammenhang (86) ist.

6. Zur abtragenden Bodenbearbeitung ausgebildete selbstfahrende Bodenbearbeitungsmaschine (10) nach einem der vorhergehenden Ansprüche,
**dadurch gekennzeichnet, dass** die Steuervorrichtung (61) dazu ausgebildet ist, abhängig von einem Betätigungszustand des Fahrschalters (58a, 58b) durch eine Bewegung des Fahrschalters (58a, 58b) den ersten Betriebsmodus zu beenden oder/und abhängig von einem Betätigungszustand des Fahrschalters (58a, 58b) durch eine Bewegung des Fahrschalters (58a, 58b) zu beginnen, den Fahrantrieb (40) im zweiten Betriebsmodus zu steuern.

7. Zur abtragenden Bodenbearbeitung ausgebildete selbstfahrende Bodenbearbeitungsmaschine (10) nach Anspruch 6,
**dadurch gekennzeichnet, dass** die Steuervorrichtung (61) dazu ausgebildet ist, auf eine die Auslenkung (φ) des Fahrschalters (58a, 58b) verändernde Bewegung des Fahrschalters (58a, 58b) hin, den ersten Betriebsmodus zu beenden.

8. Zur abtragenden Bodenbearbeitung ausgebildete selbstfahrende Bodenbearbeitungsmaschine (10) nach Anspruch 7,
**dadurch gekennzeichnet, dass** die Steuervorrichtung (61) dazu ausgebildet ist, dann den ersten Betriebsmodus zu beenden, wenn eine bereits erreichte Auslenkung (φ) des Fahrschalters (58a, 58b) betragsmäßig verringert wird.

9. Zur abtragenden Bodenbearbeitung ausgebildete selbstfahrende Bodenbearbeitungsmaschine (10) nach einem der vorhergehenden Ansprüche,
**dadurch gekennzeichnet, dass** der Fahrschalter (58a, 58b) eine Neutralstellung aufweist, wobei die Steuervorrichtung (61) den Fahrantrieb (40) weder beschleunigend noch verzögernd ansteuert, solange sich der Fahrschalter (58a, 58b) in der Neutralstellung befindet.

10. Zur abtragenden Bodenbearbeitung ausgebildete selbstfahrende Bodenbearbeitungsmaschine (10) nach Anspruch 9,
**dadurch gekennzeichnet, dass** die Neutralstellung die Bezugsstellung ist.

11. Zur abtragenden Bodenbearbeitung ausgebildete selbstfahrende Bodenbearbeitungsmaschine (10) nach einem der vorhergehenden Ansprüche,
**dadurch gekennzeichnet, dass** die Steuervorrichtung (61) dazu ausgebildet ist, abhängig vom Fahrzustand der Bodenbearbeitungsmaschine (10) und abhängig von der Betätigungsstellung des Fahrschalters (58a, 58b) den zweiten Betriebsmodus zu beenden oder/und abhängig vom Fahrzustand der Bodenbearbeitungsmaschine (10) und abhängig von der Betätigungsstellung des Fahrschalters (58a, 58b) zu beginnen, den Fahrantrieb (40) im ersten Betriebsmodus zu steuern.

12. Zur abtragenden Bodenbearbeitung ausgebildete selbstfahrende Bodenbearbeitungsmaschine (10) nach Anspruch 11, unter Einbeziehung des Anspruchs 9 oder 10,
**dadurch gekennzeichnet, dass** die Steuervorrichtung (61) dazu ausgebildet ist, dann den zweiten Betriebsmodus zu beenden, wenn die Bodenbearbeitungsmaschine (10) eine Fahrgeschwindigkeit aufweist, welche nicht höher als eine vorbestimmte Schwellengeschwindigkeit ist, und der Fahrschalter (58a, 58b) sich in der Neutralstellung befindet.

13. Zur abtragenden Bodenbearbeitung ausgebildete selbstfahrende Bodenbearbeitungsmaschine (10) nach einem der vorhergehenden Ansprüche,
**dadurch gekennzeichnet, dass** die Bodenbearbeitungsmaschine (10) wenigstens zwei mit räumlichem Abstand voneinander angeordnete, jeweils aus einer Bezugsstellung auslenkbare Fahrschalter (58a, 58b) aufweist, wobei jeder Fahrschalter (58a, 58b) mit der Steuervorrichtung (61) zusammenwirkt, um den Fahrantrieb (40) nach Maßgabe der erfassten Auslenkung (φ) einer der beiden Fahrschalter (58a, 58b) anzusteuern, um eine Fahrbewegung zu bewirken.

14. Zur abtragenden Bodenbearbeitung ausgebildete selbstfahrende Bodenbearbeitungsmaschine (10) nach einem der vorhergehenden Ansprüche,
**dadurch gekennzeichnet, dass** die Steuervorrichtung (61) dazu ausgebildet ist, den ersten oder/und den zweiten Betriebsmodus unabhängig von einem Betriebszustand der Bodenbearbeitungsvorrichtung (28) als aktiven Betriebsmodus auszuwählen.

15. Zur abtragenden Bodenbearbeitung ausgebildete selbstfahrende Bodenbearbeitungsmaschine (10) nach einem der vorhergehenden Ansprüche,
**dadurch gekennzeichnet, dass** die selbstfahrende Bodenbearbeitungsmaschine (10) eine Straßenfräsmaschine (10) oder ein Recycler oder ein Surface-Miner ist.

## Claims

1. A self-propelled earth working machine (10) configured for material-removing earth work, comprising a machine frame (12), an earth working apparatus (28) supported by the machine frame (12) having a material-removing drum (32) equipped with removal tools, a traveling gear (22) supporting the machine frame (12), a travel drive (40) for driving the earth working machine (10) to perform a travel movement in a moving direction, and an operating apparatus (80) for controlling the travel drive (40), wherein the operating apparatus (80) comprises a joystick (58a, 58b) deflectable from a reference position and a control unit (61), wherein the control unit (61) is designed to detect a deflection (φ) of the joystick (58a, 58b) with respect to the reference position and to control the travel drive (40) in accordance with the detected deflection (φ) in order to produce a travel movement, wherein the control unit (61) is switchable between a first operating mode, in which the control unit (61) assigns a value of a movement variable (v) to the deflection (φ) of the joystick (58a, 58b) according to a first assignment correlation (84) and controls the travel drive (40), and a second operating mode, in which the control unit (61) assigns a value of a movement variable (a) to the deflection (φ) of the joystick (58a, 58b) according to a second assignment correlation (86) and controls the travel drive (40),
**characterized in that** the control unit (61) in the first operating mode assigns a value of a first movement variable (v) to the deflection (φ) of the joystick (58a, 58b) according to the first assignment correlation (84) and controls the travel drive (40) in accordance with the first movement variable (v), and in the second operating mode assigns a value of a second movement variable (a) differing from the first movement variable (v) to the deflection (φ) of the joystick (58a, 58b) according to the second assignment correlation (86) and controls the travel drive (40) in accordance with the second movement variable (a), wherein the control unit (61) in the second operating mode does not control the travel drive (40) according to the first assignment correlation (84) in accordance with the first movement variable (v).

2. The self-propelled earth working machine (10) configured for material-removing earth work as recited in Claim 1,
**characterized in that** the first movement variable (v) comprises or is a target speed (v) of the earth working machine (10).

3. The self-propelled earth working machine (10) configured for material-removing earth work as recited in Claim 1 or 2,
**characterized in that** the second movement variable (a) comprises or is a target travel acceleration (a) or an operating variable of the earth working machine (10) that stands in a causal relationship with the travel acceleration of the earth working machine.

4. The self-propelled earth working machine (10) configured for material-removing earth work as recited in one of Claims 1 through 3,
**characterized in that** the control unit (61) in the first operating mode assigns to the deflection (φ) of the joystick (58a, 58b) a value of the second movement variable (a) according to a third assignment correlation (88) and controls the travel drive (40) also in accordance with the second movement variable (a).

5. The self-propelled earth working machine (10) configured for material-removing earth work as recited in Claim 4,
**characterized in that** the third assignment correlation (88) is the second assignment correlation (86).

6. The self-propelled earth working machine (10) configured for material-removing earth work as recited in one of the preceding claims,
**characterized in that** the control unit (61) is designed to end the first operating mode as a function of an actuation state of the joystick (58a, 58b) by a movement of the joystick (58a, 58b) and/or, as a function of an actuation state of the joystick (58a, 58b), to begin controlling the travel drive (40) in the second operating mode by a movement of the joystick (58a, 58b).

7. The self-propelled earth working machine (10) configured for material-removing earth work as recited in Claim 6,
**characterized in that** the control unit (61) is designed to end the first operating mode in response to a movement of the joystick (58a, 58b) changing the deflection (φ) of the joystick (58a, 58b).

8. The self-propelled earth working machine (10) configured for material-removing earth work as recited in Claim 7,
**characterized in that** the control unit (61) is designed to end the first operating mode when an already reached deflection (φ) of the joystick (58a, 58b) is reduced in magnitude.

9. The self-propelled earth working machine (10) configured for material-removing earth work as recited in one of the preceding claims,
**characterized in that** the joystick (58a, 58b) has a neutral position, wherein the control unit (61) controls the travel drive (40) neither in an accelerating nor in a decelerating manner as long as the joystick (58a, 58b) is in the neutral position.

10. The self-propelled earth working machine (10) configured for material-removing earth work as recited in Claim 9,
**characterized in that** the neutral position is the reference position.

11. The self-propelled earth working machine (10) configured for material-removing earth work as recited in one of the preceding claims,
**characterized in that** the control unit (61) is designed to end the second operating mode as a function of the travel state of the earth working machine (10) and as a function of the actuation position of the joystick (58a, 58b) and/or to begin controlling the travel drive (40) in the first operating mode as a function of the travel state of the earth working machine (10) and as a function of the actuation position of the joystick (58a, 58b) .

12. The self-propelled earth working machine (10) configured for material-removing earth work as recited in Claim 11, with the inclusion of Claim 9 or 10,
**characterized in that** the control unit (61) is designed to end the second operating mode when the earth working machine (10) has a travel speed that is not higher than a predetermined threshold speed and the joystick (58a, 58b) is in the neutral position.

13. The self-propelled earth working machine (10) configured for material-removing earth work as recited in one of the preceding claims,
**characterized in that** the earth working machine (10) comprises at least two joysticks (58a, 58b) respectively deflectable from a reference position, which are situated at a spatial distance from one another, wherein each joystick (58a, 58b) cooperates with the control unit (61), in order to control the travel drive (40) in accordance with the detected deflection (φ) of one of the two joysticks (58a, 58b) so as to produce a travel movement.

14. The self-propelled earth working machine (10) configured for material-removing earth work as recited in one of the preceding claims,
**characterized in that** the control unit (61) is designed to select the first and/or the second operating mode as the active operating mode independently of an operating state of the earth working apparatus (28).

15. The self-propelled earth working machine (10) configured for material-removing earth work as recited in one of the preceding claims,
**characterized in that** the self-propelled earth working machine (10) is a road milling machine (10) or a recycler or a surface miner.

## Revendications

1. Machine de travail du sol (10) automotrice conçue pour le travail du sol par enlèvement, comprenant un châssis de machine (12), un dispositif de travail du sol (28) porté par le châssis de machine (12) avec un rouleau d'enlèvement (32) équipé d'outils d'enlèvement, un train de roulement (22) portant le châssis de machine (12), un entraînement de déplacement (40), pour entraîner la machine de travail du sol (10) en vue d'un déplacement dans une direction de déplacement, et un dispositif de pilotage (80) pour commander l'entraînement de déplacement (40), le dispositif de pilotage (80) comprenant un levier de commande de déplacement (58a, 58b) pouvant être dévié à partir d'une position de référence et un dispositif de commande (61), le dispositif de commande (61) étant conçu pour détecter une déviation (φ) du levier de commande de déplacement (58a, 58b) par rapport à la position de référence et pour commander l'entraînement de déplacement (40) en fonction de la déviation (φ) détectée afin de provoquer un mouvement de déplacement, le dispositif de commande (61) pouvant être commuté entre un premier mode de fonctionnement dans lequel le dispositif de commande (61) associe une valeur d'une grandeur de mouvement (v) à la déviation (φ) du levier de commande de déplacement (58a, 58b) selon une première relation d'association (84), et un deuxième mode de fonctionnement dans lequel le dispositif de commande (61) associe une valeur d'une grandeur de mouvement (a) à la déviation (φ) du levier de commande de déplacement (58a, 58b) selon une deuxième relation d'association (86) et commande l'entraînement de déplacement (40),
**caractérisée en ce que**, dans le premier mode de fonctionnement, le dispositif de commande (61) associe une valeur d'une première grandeur de mouvement (v) à la déviation (φ) du levier de commande de déplacement (58a, 58b) selon la première relation d'association (84) et commande l'entraînement de déplacement (40) en fonction de la première grandeur de mouvement (v), et dans le deuxième mode de fonctionnement, il associe une valeur d'une deuxième grandeur de mouvement (v) à la déviation (φ) du levier de commande de déplacement (58a, 58b) selon la deuxième relation d'association (86) et commande l'entraînement de déplacement (40) en fonction de la deuxième grandeur de mouvement (a), le dispositif de commande (61) ne commandant pas l'entraînement de déplacement (40) selon la première relation d'association (84) en fonction de la première grandeur de mouvement (v) dans le deuxième mode de fonctionnement.

2. Machine de travail du sol (10) automotrice conçue pour le travail du sol par enlèvement selon la revendication 1,
**caractérisée en ce que** la première grandeur de mouvement (v) comprend ou est une vitesse de consigne (v) de la machine de travail du sol (10).

3. Machine de travail du sol (10) automotrice conçue pour le travail du sol par enlèvement selon la revendication 1 ou 2,
**caractérisée en ce que** la deuxième grandeur de mouvement (a) comprend ou est une accélération de déplacement de consigne (a) ou une grandeur de fonctionnement de la machine de travail du sol (10) en relation fonctionnelle avec l'accélération de déplacement de la machine de travail du sol.

4. Machine de travail du sol (10) automotrice conçue pour le travail du sol par enlèvement selon l'une des revendications 1 à 3,
**caractérisée en ce que**, dans le premier mode de fonctionnement, le dispositif de commande (61) associe une valeur de la deuxième grandeur de déplacement (a) à la déviation (φ) du levier de commande de déplacement (58a, 58b) selon une troisième relation d'association (88) et commande l'entraînement de déplacement (40) aussi en fonction de la deuxième grandeur de déplacement (a).

5. Machine de travail du sol (10) automotrice conçue pour le travail du sol par enlèvement selon la revendication 4,
**caractérisée en ce que** la troisième relation d'association (88) est la deuxième relation d'association (86).

6. Machine de travail du sol automotrice (10) conçue pour le travail du sol par enlèvement selon l'une quelconque des revendications précédentes,
**caractérisée en ce que** le dispositif de commande (61) est configuré pour, en fonction d'un état d'actionnement du levier de commande de déplacement (58a, 58b), par un mouvement du levier de commande de déplacement (58a, 58b), mettre fin au premier mode de fonctionnement ou/et, en fonction d'un état d'actionnement du levier de commande de déplacement (58a, 58b), par un mouvement du levier de commande de déplacement (58a, 58b), commencer à commander l'entraînement de déplacement (40) dans le deuxième mode de fonctionnement.

7. Machine de travail du sol automotrice (10) conçue pour le travail du sol par enlèvement selon la revendication 6,
**caractérisée en ce que** le dispositif de commande (61) est configuré pour mettre fin au premier mode de fonctionnement en réponse à un mouvement du levier de commande de déplacement (58a, 58b) modifiant la déviation (φ) du levier de commande de déplacement (58a, 58b).

8. Machine de travail du sol automotrice (10) conçue pour le travail du sol par enlèvement selon la revendication 7,
**caractérisée en ce que** le dispositif de commande (61) est conçue pour mettre fin au premier mode de fonctionnement lorsqu'une déviation (φ) déjà atteint du levier de commande de déplacement (58a, 58b) est diminué en valeur absolue.

9. Machine de travail du sol automotrice (10) conçue pour le travail du sol par enlèvement selon l'une quelconque des revendications précédentes,
**caractérisée en ce que** le levier de commande de déplacement (58a, 58b) présente une position neutre, le dispositif de commande (61) ne commandant pas l'entraînement de déplacement (40), ni en accélération, ni en décélération, tant que le levier de commande de déplacement (58a, 58b) se trouve dans la position neutre.

10. Machine de travail du sol automotrice (10) conçue pour le travail du sol par enlèvement selon la revendication 9,
**caractérisée en ce que** la position neutre est la position de référence.

11. Machine de travail du sol automotrice (10) conçue pour le travail du sol par enlèvement selon l'une quelconque des revendications précédentes,
**caractérisée en ce que** le dispositif de commande (61) est conçu pour, en fonction de l'état de déplacement de la machine de travail du sol (10) et en fonction de la position d'actionnement du levier de commande de déplacement (58a, 58b), mettre fin au deuxième mode de fonctionnement ou/et, en fonction de l'état de déplacement de la machine de travail du sol (10) et en fonction de la position d'actionnement du levier de commande de déplacement (58a, 58b), commencer à commander l'entraînement de déplacement (40) dans le premier mode de fonctionnement.

12. Machine de travail du sol automotrice (10) conçue pour le travail du sol par enlèvement selon la revendication 11, en incluant la revendication 9 ou 10,
**caractérisée en ce que** le dispositif de commande (61) est adapté pour mettre fin au deuxième mode de fonctionnement lorsque la machine de travail du sol (10) a une vitesse de déplacement qui n'est pas supérieure à une vitesse seuil prédéterminée et que le levier de commande de déplacement (58a, 58b) est dans la position neutre.

13. Machine de travail du sol (10) automotrice conçue pour le travail du sol par enlèvement selon l'une des revendications précédentes,
**caractérisée en ce que** la machine de travail du sol (10) comporte au moins deux leviers de commande de déplacement (58a, 58b) disposés à une distance spatiale l'un de l'autre et pouvant être déviés chacun d'une position de référence, chaque levier de commande de déplacement (58a, 58b) coopérant avec le dispositif de commande (61) pour commander l'entraînement de déplacement (40) en fonction de la déviation (φ) détectée de l'un des deux leviers de commande de déplacement (58a, 58b) afin de provoquer un mouvement de déplacement.

14. Machine de travail du sol automotrice (10) conçue pour le travail du sol par enlèvement selon l'une quelconque des revendications précédentes,
**caractérisée en ce que** le dispositif de commande (61) est adapté pour sélectionner le premier ou/et le deuxième mode de fonctionnement comme mode de fonctionnement actif, indépendamment d'un état de fonctionnement du dispositif de travail du sol (28).

15. Machine de travail du sol automotrice (10) conçue pour le travail du sol par enlèvement selon l'une quelconque des revendications précédentes,
**caractérisée en ce que** la machine de travail du sol automotrice (10) est une fraiseuse routière (10) ou un recycleur ou une surface miner.
